# EUROPÄISCHE PATENTSCHRIFT

(11) **EP 3 701 598 B1**
(45) Veröffentlichungstag und Bekanntmachung des Hinweises auf die Patenterteilung: **20.12.2023**
(21) Anmeldenummer: 18795474.8
(22) Anmeldetag: 24.10.2018
(51) Int. Cl.: H01R 25/14, H01R 25/16, H02G 3/06, H02G 5/04

(54) **LEITUNGSHALTER, STROMSCHIENENELEMENT, STROMSCHIENENSYSTEM, MECHANISCHES VERBINDUNGSELEMENT FÜR EIN STROMSCHIENENSYSTEM, VERFAHREN ZUR HERSTELLUNG EINES STROMSCHIENENELEMENTS UND VERFAHREN ZUR HERSTELLUNG EINES STROMSCHIENENSYSTEMS**
CABLE RETAINER, BUSBAR ELEMENT, BUSBAR SYSTEM, MECHANICAL CONNECTING ELEMENT FOR A BUSBAR SYSTEM, METHOD FOR PRODUCING A BUSBAR ELEMENT, AND METHOD FOR PRODUCING A BUSBAR SYSTEM
SUPPORT DE LIGNE, ÉLÉMENT DE BARRE CONDUCTRICE, SYSTÈME DE BARRE CONDUCTRICE, ÉLÉMENT DE CONNEXION MÉCANIQUE POUR UN SYSTÈME DE BARRE CONDUCTRICE, PROCÉDÉ DE FABRICATION D'UN ÉLÉMENT DE BARRE CONDUCTRICE ET PROCÉDÉ DE FABRICATION D'UN SYSTÈME DE BARRE CONDUCTRICE

(30) Priorität: 27.10.2017 DE 102017125225
(43) Veröffentlichungstag der Anmeldung: 02.09.2020
(73) Patentinhaber: SITECO GmbH, 83301 Traunreut (DE)
(72) Erfinder: HÖSLE, Tobias, 83329 Waging am See (DE); SPRICK, Oliver, 83071 Stephanskirchen (DE); SCHIEBL, Matthias, 83558 Maitenbeth (DE); KECHT, Sarah, 83355 Grabenstätt (DE)
(74) Vertreter: Schmidt, Steffen
(86) Internationale Anmeldenummer: PCT/EP2018/079190
(87) Internationale Veröffentlichungsnummer: WO 2019/081592

(56) Entgegenhaltungen:
- DE-A1-102010 032 383
- DE-A1-102010 055 789
- DE-A1-102011 056 043
- DE-U1-202015 106 730
- DE-U1-202016 104 790

## Beschreibung

Es werden ein Leitungshalter für ein Stromschienensystem und ein Stromschienenelement angegeben.

Ein Stromschienensystem mit verschiedenen Elementen ist beispielsweise in der Druckschrift DE 10 2010 055 789 B4 angegeben.

DE 20 2015 106 730 U1 offenbart einen Stecker für eine Durchgangsverdrahtung einer Leuchte mit einem Gehäuse zur Aufnahme und Durchführung der Leitungen einer Durchgangsverdrahtung, welche vorzugsweise parallel zueinander in zwei im Wesentlichen parallelen Ebenen angeordnet sind.

DE 10 2010 032 382 A1 offenbart einen Stromschienenverbinder zur elektrische Leitenden Verbindung von zugeordneten Leitungen, die einseitig in offenen Nuten eines kammartigen Stromführungsprofils zwei benachbarter Stromschienen aufgenommen sind und sich in Längsrichtung der Stromschiene erstrecken

Es soll ein verbessertes Stromschienensystem mit einfacher Längeneinstellung und vereinfachter Montage angegeben werden. Weiterhin sollen ein verbesserter Leitungshalter für ein Stromschienensystem, ein verbessertes Stromschienenelement, ein verbessertes mechanisches Verbindungselement, ein einfaches Verfahren zur Herstellung eines Stromschienenelements und ein vereinfachtes Verfahren zur Herstellung eines Stromschienensystems angegeben werden.

Diese Aufgaben werden durch einen Leitungshalter mit den Merkmalen des Patentanspruchs 1 gelöst.

Vorteilhafte Ausführungsformen und Weiterbildungen des Leitungshalters und des Stromschienehelements sind in den jeweils abhängigen Ansprüchen angegeben.

Gemäß einer Ausführungsform umfasst der Leitungshalter eine Vielzahl parallel zueinander angeordneter erster Ausnehmungen.

Gemäß einer weiteren Ausführungsform umfasst der Leitungshalter eine Vielzahl parallel zueinander angeordneter zweiter Ausnehmungen.

Die ersten Ausnehmungen und die zweiten Ausnehmungen sind hierbei bevorzugt zur Aufnahme elektrischer Leitungen vorgesehen. Außerdem verlaufen die ersten Ausnehmungen und die zweiten Ausnehmungen bevorzugt parallel zueinander.

Gemäß einer weiteren Ausführungsform des Leitungshalters liegen die ersten Ausnehmungen in einer ersten Haupterstreckungsebene und die zweiten Ausnehmungen in einer zweiten Haupterstreckungsebene. Bevorzugt sind die erste Haupterstreckungsebene der ersten Ausnehmungen und die zweite Haupterstreckungsebene parallel zueinander und besonders bevorzugt weiterhin parallel zu einer Haupterstreckungsebene des Leitungshalters angeordnet.

Besonders bevorzugt sind die erste Haupterstreckungsebene und die zweite Haupterstreckungsebene in einer vertikalen Richtung, die senkrecht auf der ersten und der zweiten Haupterstreckungsebene steht, beabstandet voneinander angeordnet. Auf diese Art und Weise können die Ausnehmungen zur Aufnahme der elektrischen Leitungen besonders platzsparend angeordnet und der Leitungshalter besonders kompakt ausgebildet werden, wobei trotzdem die Vorgaben von gesetzlichen Normen, wie etwa der Leuchtennorm DIN EN 60598 oder der Notlichtnorm DIN EN 60598-2-22, hinsichtlich der Luft- und Kriechstrecken in dem Leitungshalter einfach eingehalten werden können. Die ermöglicht eine optisch ansprechende Ausgestaltung eines Stromschienensystems, von dem der Leitungshalter bevorzugt umfasst ist, sowie geringe Materialkosten bei der Herstellung des Leitungshalters.

Gemäß einer Ausführungsform des Leitungshalters verläuft die vertikale Richtung hierbei von einer Oberseite des Leitungshalters zu einer Unterseite des Leitungshalters, wobei die Oberseite des Leitungshalters der Unterseite gegenüberliegt. Die Oberseite des Leitungshalters und die Unterseite des Leitungshalters sind besonders bevorzugt ebenfalls im Wesentlichen parallel zu der ersten Haupterstreckungsebene und der zweiten Haupterstreckungsebene ausgebildet. Insbesondere hängt die vertikale Richtung nicht notwendigerweise von der Position des Leitungshalters ab. Insbesondere stimmt die vertikale Richtung nicht notwendigerweise mit der Richtung einer Gravitationskraft überein.

Gemäß einer weiteren Ausführungsform umfasst der Leitungshalter weitere Ausnehmungen, die bevorzugt in mindestens einer weiteren Haupterstreckungsebene liegen und in dieser weiteren Haupterstreckungsebene parallel zueinander angeordnet sind. Die weitere Haupterstreckungsebene ist in der vertikalen Richtung bevorzugt beabstandet zu der ersten Haupterstreckungsebene und beabstandet zu der zweiten Haupterstreckungsebene angeordnet. Weiterhin ist es auch möglich, dass die weiteren Ausnehmungen in mehreren weiteren Haupterstreckungsebenen jeweils parallel zueinander angeordnet sind, wobei die Haupterstreckungsebenen jeweils bevorzugt in der vertikalen Richtung beabstandet zueinander angeordnet sind. Sämtliche Haupterstreckungsebenen sind hierbei bevorzugt parallel zueinander angeordnet. Mit anderen Worten können die Ausnehmungen des Leitungshalters nicht nur in zwei in vertikaler Richtung beabstandeten Haupterstreckungsebenen angeordnet sein, sondern in mehreren in vertikaler Richtung beabstandeten Haupterstreckungsebenen.

Die Ausnehmungen können beispielsweise als U-förmige oder V-förmige Gräben ausgebildet sein. Besonders bevorzugt weisen die Ausnehmungen Öffnungen auf, die von der Oberseite des Leitungshalters abgewandt sind. Besonders bevorzugt sind die Ausnehmungen von der Unterseite des nicht montierten Leitungshalters her durch die Öffnungen frei zugänglich. Auf diese Art und Weise können elektrische Leitungen in die Ausnehmungen eingesetzt werden.

Gemäß einer Ausführungsform ist der Leitungshalter aus Kunststoff gefertigt, besonders bevorzugt vollständig, beispielsweise mit Hilfe eines Spritzgussverfahrens. Besonders bevorzugt ist der Leitungshalter einstückig ausgebildet. Mit anderen Worten sind die ersten Ausnehmungen und die zweiten Ausnehmungen nicht separat voneinander gefertigt und dann zusammengesetzt, sondern bevorzugt aus einem gemeinsamen Material in einem gemeinsamen Verfahren hergestellt.

Gemäß einer weiteren Ausführungsform des Leitungshalters sind die ersten Ausnehmungen und die zweiten Ausnehmungen in einer horizontalen Richtung alternierend angeordnet. Mit anderen Worten ist bevorzugt jeweils eine erste Ausnehmung direkt benachbart zu einer zweiten Ausnehmung angeordnet, wobei die erste Ausnehmung jeweils in vertikaler Richtung beabstandet von der zweiten Ausnehmung angeordnet ist.

Die horizontale Richtung verläuft hierbei parallel zu den Haupterstreckungsebenen und steht auf der vertikalen Richtung senkrecht. Anders ausgedrückt, verläuft die horizontale Richtung von einer ersten Seitenfläche des Leitungshalters zu einer zweiten Seitenfläche des Leitungshalters, die der ersten Seitenfläche gegenüberliegt.

Erfindungsgemäß weist der Leitungshalter zwei gegenüberliegende Stirnseiten auf. Die Stirnseiten verlaufen hierbei bevorzugt von einer Seitenfläche des Leitungshalters zu anderen Seitenfläche des Leitungshalters.

Besonders bevorzugt ist an einer Stirnseite des Leitungshalters ein erstes Steckgesicht angeordnet. Weiterhin ist auch an der anderen Stirnseite des Leitungshalters bevorzugt ein zweites Steckgesicht angeordnet. Besonders bevorzugt handelt es sich bei den beiden Steckgesichtern um an den Leitungshalter angeformte Steckstrukturen. Das erste Steckgesicht und das zweite Steckgesicht sind bevorzugt voneinander verschieden. Bevorzugt sind das erste Steckgesicht und das zweite Steckgesicht dazu geeignet, mechanisch stabil ineinander gesteckt zu werden. So können mehrere Leitungshalter mechanisch stabil auf einfache Art und Weise miteinander verbunden werden. Mit Hilfe der Steckgesichter kann eine Vielzahl an gleich ausgebildeten Leitungshaltern beliebig miteinander verbunden werden. Das erste Steckgesicht und/oder das zweite Steckgesicht sind besonders bevorzugt einstückig mit dem Leitungshalter ausgebildet und beispielsweise bei einem Spritzgussprozess zur Erzeugung des Leitungshalters gefertigt.

Besonders bevorzugt weisen das erste Steckgesicht und/oder das zweite Steckgesicht eine stirnseitige Außenfläche auf, die frei ist von Vorsprüngen, die in Richtung der Haupterstreckungsebene des Leitungshalters verlaufen.

So liegen bevorzugt alle stirnseitigen Konturen der Steckstrukturen des ersten Steckgesichts und/oder des zweiten Steckgesichts in einer gemeinsamen Ebene. Die stirnseitige Außenfläche des Steckgesichts bildet bevorzugt die Stirnseite des Leitungshalters aus. Mit anderen Worten ist die Stirnseite des Leitungshalters bevorzugt frei von Vorsprüngen, die in Richtung der Haupterstreckungsebene aus der Stirnseite herausragen. Dies verringert die Gefahr der Beschädigung des Leitungshalters deutlich.

Bevorzugt weist mindestens eines der Steckgesichter, bevorzugt das erste Steckgesicht, eine Dachfläche auf, die von der einen Seitenfläche des Leitungshalters zu der anderen Seitenfläche an der Oberseite des Leitungshalters verläuft. Die Dachfläche ist hierbei bevorzugt frei von Öffnungen und schließt einen Innenraum des Steckgesichts von der Oberseite des Leitungshalters bevorzugt ab. Hierbei ist der Innenraum des Steckgesichts bevorzugt von der Unterseite des Leitungshalters zugänglich.

Erfindungsgemäß sind Schlitze auf einer Oberseite des zweiten Steckgesichts (11) vorgesehen, die entlang der Ausnehmungen verlaufen und eine gleitende Verbindung mit dem ersten Steckgesicht (10) eines weiteren Leitungshalters erlauben. Die Schlitze verlaufen hierbei besonders bevorzugt entlang einer Haupterstreckungsrichtung der Ausnehmungen. Besonders bevorzugt erlauben die Schlitze eine gleitende Verbindung zweier Leitungshalter. Die Schlitze sorgen mit Vorteil für eine elektrische Isolierung und ermöglichen es so, die gesetzlich vorgegebene Luft- und Kriechstrecken einzuhalten.

Gemäß einer weiteren Ausführungsform umfasst der Leitungshalter an einem Endbereich der Oberseite einen Schnapphaken. Besonders bevorzugt ist bei dieser Ausführungsform an einem gegenüberliegenden Endbereich der Oberseite eine Aufnahme für den Schnapphaken vorgesehen. Der Schnapphaken ist besonders bevorzugt dazu geeignet, in die Aufnahme eingeschnappt zu werden. Auf diese Art und Weise können gleichartig ausgebildete ineinander gesteckte Leitungshalter mechanisch miteinander fixiert werden

Besonders bevorzugt ist die Aufnahme für den Schnapphaken an das eine Steckgesicht angeformt und der Schnapphaken an das andere Steckgesicht. Besonders bevorzugt sind der Schnapphaken und die Aufnahme für den Schnapphaken einstückig mit dem Leitungshalter ausgebildet.

Gemäß einer weiteren Ausführungsform des Leitungshalters weisen Wände der Ausnehmungen Durchbrüche auf. Die Durchbrüche durchdringen die Wände der Ausnehmungen hierbei besonders bevorzugt vollständig. Bevorzugt sind jeweils im Bereich eines Durchbruchs Nasen an den Innenseiten der Wand ausgebildet, die zur Befestigung der elektrischen Leitungen in den Ausnehmungen vorgesehen sind. Die Nasen sind bevorzugt an einer Innenfläche der Ausnehmung angeordnet und ragen in die Ausnehmung hinein. Die Durchbrüche weisen den Vorteil auf, ein besonders kostengünstiges Spritzgusswerkzeug zur Herstellung des Leitungshalters verwenden zu können, da Hinterschnitte vermieden werden können.

Gemäß einer weiteren Ausführungsform des Leitungshalters ist an einer Seitenfläche des Leitungshalters ein Justageelement angeordnet. Das Justageelement ist bevorzugt an den Leitungshalter angeformt. Beispielsweise ist das Justageelement als Wand ausgebildet. Bevorzugt ragt das Justageelement entlang der vertikalen Richtung über die Unterseite des Leitungshalters hinaus. Besonders bevorzugt ist die Seitenfläche des Leitungshalters, die dem Justageelement gegenüberliegt, frei von einem weiteren Justageelement.

Das Justageelement ist dazu vorgesehen und eingerichtet, das fehlerhafte Einstecken eines Funktionseinsatzes in ein Tragschienenelement, das den Leitungshalter umfasst, zu verhindern.

Beispielsweise weist der Leitungshalter eine Länge zwischen einschließlich 10 Zentimeter und einschließlich 150 Zentimeter auf. Die Breite des Leitungshalters kann beispielsweise zwischen einschließlich 5 Zentimeter und einschließlich 20 Zentimeter liegen. Die Höhe des Leitungshalters beträgt beispielsweise zwischen einschließlich 1 Zentimeter und einschließlich 5 Zentimeter.

Der hier beschriebene Leitungshalter ist insbesondere dazu geeignet, in einem Stromschienenelement verwendet zu werden. Die im Zusammenhang mit dem Leitungshalter beschriebenen Merkmale und Ausführungsformen können daher ebenso bei dem Stromschienenelement ausgebildet sein und umgekehrt.

Ein Stromschienenelement weist gemäß einer Ausführungsform ein Tragschienenelement auf, das zwei gegenüberliegende Seitenwände und eine Montagewand umfasst. Die Montagewand ist besonders bevorzugt dazu vorgesehen, an einer Gebäudewand, wie beispielsweise einer Zimmerdecke, montiert zu werden. Die Montagewand kann plan ausgebildet sein oder Biegungen aufweisen. Die Montagewand ist bevorzugt zwischen den beiden Seitenwänden angeordnet. Die Seitenwände sind bevorzugt an den Seiten der Montagewand befestigt und können beispielsweise zumindest teilweise V-förmig zueinander angeordnet sein. Mit anderen Worten können die beiden Seitenwände mit der Montagewand eine Kavität ausbilden, deren Querschnittsfläche sich ausgehend von der Montagewand zu einer Öffnung des Tragschienenelements vergrößert, bevorzugt kontinuierlich. Dies weist den Vorteil auf, dass der Leitungshalter und/oder der Funktionseinsatz einfach in dem Tragschienenelement positioniert werden können.

Das Tragschienenelement ist beispielsweise als ein metallisches halboffenes Profilrohr ausgebildet. Das Tragschienenelement kann einen metallischen Kern aufweisen, der mit einer elektrisch isolierenden Beschichtung, wie etwa einer Lackierung, versehen ist.

Besonders bevorzugt sind innerhalb des Tragschienenelements mindestens zwei Leitungshalter angeordnet. Zweckmäßigerweise weist das Tragschienenelement eine Länge auf, die in etwa einer Vielfachen der Länge eines Leitungshalters entspricht. Eine Höhe des Tragschienenelements liegt beispielsweise zwischen einschließlich 5 Zentimeter und einschließlich 25 Zentimeter.

Gemäß einer Ausführungsform des Stromschienenelements umfasst dieses einen Leitungshalter, wie er bereits beschrieben wurde. Der Leitungshalter ist hierbei bevorzugt in der Kavität des Tragschienenelements angeordnet, wobei die Haupterstreckungsebene des Leitungshalters entlang der Montagewand des Tragschienenelements angeordnet ist. Hierbei weist die Oberseite des Leitungshalters bevorzugt zur Montagewand und die Unterseite des Leitungshalters zur Öffnung der Kavität des Tragschienenelements. Die Öffnungen der Ausnehmungen des Leitungshalters weisen besonders bevorzugt in die vertikale Richtung. Auf diese Art und Weise können elektrische Leitungen, die in den Ausnehmungen positioniert sein können, besonders einfach durch einen Funktionseinsatz abgegriffen werden.

In die Ausnehmungen des Leitungshalters sind besonders bevorzugt elektrische Leitungen eingebracht. Bei den elektrischen Leitungen handelt es sich besonders bevorzugt um metallische Drähte, etwa aus Kupfer. Besonders bevorzugt sind die elektrischen Leitungen frei von einer isolierenden Ummantelung. Durch die oben beschriebene Anordnung der ersten Ausnehmungen und der zweiten Ausnehmungen ist es mit Vorteil möglich, in den Ausnehmungen elektrische Leitungen ohne elektrisch isolierende Ummantelung, also blanke Drähte, zu positionieren und hierbei die gesetzlichen Vorgaben hinsichtlich Luft- und Kriechstrecken einzuhalten. Die Verwendung von elektrischen Leitungen ohne Ummantelung weist den Vorteil auf, dass ein Schritt zur teilweisen Entfernung der Ummantelung um elektrische Kontaktstellen zur elektrischen Kontaktierung des Funktionseinsatzes zu schaffen, entfällt.

Es müssen nicht notwendigerweise in allen Ausnehmungen elektrische Leitungen eingebracht sein. Vielmehr ist es möglich, die Ausnehmungen je nach Anwendung mit einer gewünschten Anzahl an elektrischen Leitungen zu bestücken, wobei die maximale Anzahl der elektrischen Leitungen durch die Anzahl der Ausnehmungen vorgegeben ist. Mit anderen Worten ist es mit Vorteil möglich, in den Ausnehmungen des Leitungshalters eine flexible Anzahl an elektrischen Leitungen je nach Kundenanforderung vorzusehen. Lediglich die Maximalzahl der möglichen elektrischen Leitungen ist durch die Anzahl der Ausnehmungen vorgegeben. Eine Obergrenze für die Anzahl der Ausnehmungen liegt beispielsweise bei 25.

Besonders bevorzugt werden in die Ausnehmungen des Leitungshalters nur so viele elektrische Leitungen eingesetzt wie für die Anwendung benötigt werden. Auf diese Art und Weise kann die Menge an benötigtem Material für die elektrischen Leitungen so niedrig wie möglich gehalten werden.

Das Stromschienenelement weist den Vorteil auf, dass ein elektrischer Abgriff über Funktionseinsätze an jeder Stelle des Stromschienenelements erfolgen kann. Dies wird insbesondere durch die Anordnung von elektrischen Leitungen, die frei von einer isolierenden Ummantelung sind, ermöglicht.

Gemäß einer Ausführungsform weist das Stromschienenelement einen Funktionseinsatz auf, der ein elektrisches Abgriffelement aufweist, wobei das elektrische Abgriffelement parallel zur vertikalen Richtung angeordnet ist und in die Öffnungen der Ausnehmungen des Leitungshalters eingreift. Hierbei stellt das elektrische Abgriffelement bevorzugt einen elektrischen Kontakt zwischen den elektrischen Leitungen in den Ausnehmungen und dem Funktionseinsatz her. Aufgrund der strukturellen Anordnung der einzelnen Elemente und Merkmale des Leitungshalters und des Tragschienenelements ist es bei dem vorliegenden Stromschienenelement mit Vorteil möglich, dass das elektrische Abgriffelement des Funktionseinsatzes entgegen der vertikalen Richtung in das Tragschienenelement zur elektrischen Kontaktierung eingesetzt werden kann. Dies ermöglicht eine einfache Positionierung und Montage des Funktionseinsatzes.

Bei dem Funktionseinsatz handelt es sich besonders bevorzugt um einen Leuchteneinsatz, der eine Leuchte umfasst, die im Betrieb Licht von einer Lichtaustrittsfläche emittiert. Weiterhin ist es möglich, dass der Funktionseinsatz eines der folgenden Funktionselemente umfasst: Lautsprecher, Sensoren, Brandmelder, Bewegungsmelder.

Gemäß einer Ausführungsform des Stromschienenelements ist der Funktionseinsatz in das Stromschienenelement voreingebracht und dort vorpositioniert. Die genaue Position des Funktionseinsatzes kann durch den Kunden festgelegt werden. Der Funktionseinsatz kann dann mit Vorteil durch den Kunden mittels Druck in der ausgewählten Position in dem Stromschienenelement fixiert werden.

Gemäß einer weiteren Ausführungsform des Stromschienenelements ist an einer der Stirnseiten eines der Leitungshalter des Stromschienenelements ein Einspeiser angeordnet. Der Einspeiser ist dazu vorgesehen, an einer Stirnseite des gesamten Stromschienensystems angeordnet zu sein. Mit anderen Worten umfasst ein Stromschienensystem mit mehreren Stromschienen eine Stromschiene, deren Stirnseite die Stirnseite des gesamten Stromschienensystems bildet. An dieser Stirnseite ist bevorzugt der Einspeiser angeordnet. Der Einspeiser dient zur Einspeisung von elektrischer Energie in die elektrischen Leitungen in den Ausnehmungen des Leitungshalters. Besonders bevorzugt verbindet der Einspeiser externe elektrische Leitungen mit den elektrischen Leitungen in den Ausnehmungen des Leitungshalters.

Gemäß einer weiteren Ausführungsform des Stromschienenelements umfasst der Einspeiser einen Schnapphaken, der gleichartig zu dem Schnapphaken an der Oberseite des Leitungshalters ausgebildet ist. Mit Vorteil kann der Einspeiser mit dem Schnapphaken in die Aufnahme des Leitungshalters für den Schnapphaken eingeklippst werden.

Gemäß einer weiteren Ausführungsform umfasst das Stromschienenelement eine Erdungsfeder. Die Erdungsfeder ist besonders bevorzugt zwischen der Montagewand und dem Leitungshalter angeordnet. Die Erdungsfeder ist bevorzugt dazu vorgesehen, das Tragschienenelement zu erden.

Die Erdungsfeder weist bevorzugt einen ersten Kontaktierungsbereich auf, der dazu vorgesehen ist, mit dem Tragschienenelement elektrisch leitend verbunden zu werden. Beispielsweise ist der erste Kontaktierungsbereich als Arm ausgebildet, der aus einem Basiskörper der Erdungsfeder herausragt. Der erste Kontaktierungsbereich ist bevorzugt elektrisch leitend mit der Montagewand verbunden. Hierzu weist der Kontaktierungsbereich bevorzugt eine scharfkantige Kontur auf, die in die Montagewand eingreifen. Beispielsweise weist die scharfkantige Kontur Spitzen auf. Beispielsweise weist die Montagewand eine S-förmige Krümmung auf und die scharfkantige Kontur des ersten Kontaktierungsbereichs greift in einen Bauch der S-förmigen Krümmung ein.

Die Erdungsfeder kann weiterhin einen zweiten Kontaktierungsbereich aufweisen, der auch dazu vorgesehen ist, elektrisch leitend mit der Montagewand verbunden zu werden. Beispielsweise weist der zweite Kontaktierungsbereich eine Form auf, die achsensymmetrisch zu dem ersten Kontaktierungsbereich ausgebildet ist. Bevorzugt ist auch der zweite Kontaktierungsbereich als Arm ausgebildet, der aus dem Basiskörper herausragt. Bevorzugt erstrecken sich der Arm des ersten Kontaktierungsbereichs und der Arm des zweiten Kontaktierungsbereichs in die gleiche Richtung, bevorzugt entgegen der vertikalen Richtung. Der zweite Kontaktierungsbereich ist ebenfalls bevorzugt elektrisch leitend mit der Montagewand verbunden. Hierzu weist der Kontaktierungsbereich bevorzugt eine scharfkantige Kontur, beispielsweise Spitzen, auf, die in die Montagewand eingreifen. Beispielsweise weist die Montagewand eine Krümmung auf, die spiegelsymmetrisch zu der S-Krümmung der Montagewand ausgebildet ist und die scharfkantige Kontur des zweiten Kontaktierungsbereichs greift in einen Bauch dieser Krümmung ein.

Weist das Tragschienenelement eine elektrisch isolierende Beschichtung, wie beispielsweise eine Lackierung auf, so durchdringt die scharfkantige Kontur des ersten Kontaktierungsbereichs und die scharfkantige Kontur des zweiten Kontaktierungsbereichs die Beschichtung bevorzugt und greifen in den darunterliegenden metallischen Kern ein, so dass bevorzugt eine elektrisch leitende Verbindung zwischen der Erdungsfeder und dem Tragschienenelement erzeugt wird.

Gemäß einer weiteren Ausführungsform weist die Erdungsfeder einen zentralen Bereich auf, der zwischen dem ersten Kontaktierungsbereich und dem zweiten Kontaktierungsbereich angeordnet ist und sich ebenfalls bevorzugt aus dem Basiskörper der Erdungsfeder entgegen der vertikalen Richtung heraus erstreckt. Bevorzugt steht der zentrale Bereich nicht in direktem Kontakt mit dem Tragschienenelement und stellt auch keine elektrisch leitende Verbindung mit dem Tragschienenelement her. Der zentrale Bereich dient mit Vorteil in der Regel der mechanischen Stabilisierung der Erdungsfeder.

Gemäß einer weiteren Ausführungsform weist die Erdungsfeder einen dritten Kontaktierungsbereich auf, der dazu vorgesehen ist, einen elektrischen Kontakt der Erdungsfeder zu einer der elektrischen Leitungen herzustellen. Beispielsweise weist die Erdungsfeder eine Öse als Kontaktierungsbereich auf, die eine der elektrischen Leitungen zumindest teilweise umschließt und mit der elektrischen Leitung elektrisch leitend verbunden ist. Die Öse steht hierbei bevorzugt mit der elektrischen Leitung in direktem physischem Kontakt, so dass eine elektrische Verbindung zwischen der Öse und der elektrischen Leitung hergestellt wird. Besonders bevorzugt ist die Öse nicht vollständig geschlossen und kann von oben auf die elektrische Leitung aufgesteckt werden.

Besonders bevorzugt sind sämtliche oben beschriebenen Elemente der Erdungsfeder einstückig ausgebildet. Beispielsweise handelt es sich bei der Erdungsfeder um ein metallisches Stanzelement, das mit Vorteil besonders einfach und kostengünstig hergestellt werden kann.

Gemäß einer weiteren Ausführungsform des Stromschienenelements ist der Leitungshalter mechanisch stabil mit einem elektrischen Verbindungselement verbunden. Das elektrische Verbindungselement ist dazu vorgesehen, eine elektrisch leitende Verbindung zwischen zwei direkt benachbarten Stromschienenelementen herzustellen. Das elektrische Verbindungselement ist besonders bevorzugt an einer Stirnseite des Leitungshalters angeordnet, der zu einer Stirnseite des Stromschienenelements weist. Besonders bevorzugt ist das elektrische Verbindungselement dazu vorgesehen, mit dem Leitungshalter eines weiteren Stromschienenelements mechanisch stabil verbunden zu werden. Hierbei werden bevorzugt die elektrischen Leitungen in dem einen Leitungshalter mit den elektrischen Leitungen des anderen Leitungshalters elektrisch leitend miteinander verbunden.

Beispielsweise weist das elektrische Verbindungselement das erste Steckgesicht an der einen Stirnseite und das zweite Steckgesicht an der anderen Stirnseite auf. So können das erste Steckgesicht des elektrischen Verbindungselements mit dem zweiten Steckgesicht des einen Leitungshalters und das zweite Steckgesicht des elektrischen Verbindungselements mit dem ersten Steckgesicht des anderen Leitungshalters mechanisch verbunden werden. Hierbei sind die beiden Steckgesichter bevorzugt derart ausgebildet, dass das erste Steckgesicht des Leitungshalters mit einer gesamten Länge in das zweite Steckgesicht des elektrischen Verbindungselements eingesetzt werden kann oder dass das zweite Steckgesicht des Leitungshalters mit einer gesamten Länge in das erste Steckgesicht des elektrischen Verbindungselements eingesetzt werden kann. So können sich die Leitungshalter bei erhöhten Temperaturen entsprechend ausdehnen.

Bevorzugt weist das elektrische Verbindungselement an einer Oberseite ebenfalls den Schnapphaken und die Aufnahme für den Schnapphaken auf. Der Schnapphaken und die Aufnahme für den Schnapphaken sind bevorzugt gleichartig ausgebildet, wie der Schnapphaken und die Aufnahme des Schnapphakens auf der Oberseite der Leitungshalter. Auf diese Art und Weise kann die mechanische Verbindung des elektrischen Verbindungselements mit den beiden Leitungshaltern über die Schnapphaken mechanisch fixiert werden.

Gemäß einer weiteren Ausführungsform des Stromschienenelements weist das Tragschienenelement ein Winkelelement auf. Das Winkelelement ist bevorzugt an einer Innenfläche der Montagewand angebracht, bevorzugt mittig in Bezug auf die Seitenfläche des Tragschienenelements. Das Winkelelement kann beispielsweise durch Clinchen befestigt werden. Besonders bevorzugt weist das Winkelelement ein Fenster auf. Besonders bevorzugt umfasst das Stromschienenelement bei dieser Ausführungsform ein mechanisches Verbindungselement. Das Verbindungselement weist bevorzugt ein Rastelement auf, das in das Fenster eingreift.

Gemäß einer Ausführungsform des mechanischen Verbindungselements umfasst das mechanische Verbindungselement zwei Seitenteile und eine Verbindungswand, die zwischen den Seitenteilen angeordnet ist. An einer Außenfläche der Verbindungswand ist mindestens ein Rastelement angeordnet, das dazu vorgesehen ist, in das Winkelelement des Tragschienenelements einzugreifen.

Die Verbindungswand weist bevorzugt eine geringere Ausdehnung in einer Haupterstreckungsebene auf als die beiden Seitenteile, so dass jedes Seitenteil über die Verbindungswand hinausragt. Bevorzugt ist die Verbindungswand mittig zwischen den Seitenteilen angeordnet, so dass die Seitenteile symmetrisch zu beiden Seiten über die Verbindungswand hinausragen. Weist die Verbindungswand eine geringere Fläche auf als die Seitenteile, so kann das Stromschienenelement mit Vorteil mit einem geringeren Gewicht ausgebildet werden. Außerdem ist so eine Kante der Verbindungswand zurückversetzt zu den Seitenteilen des mechanischen Verbindungselements angeordnet, die zur Positionierung bei der Verbindung mit einem weiteren Stromschienenelement dient.

Gemäß einer weiteren Ausführungsform weist das mechanische Verbindungselement Vorführungen auf, die jeweils an der Oberkante der Seitenteile angeordnet sind. Bevorzugt ragen die Vorführungen über die Seitenteile in einer Haupterstreckungsrichtung des mechanischen Verbindungselements hinaus. Die Vorführungen können beispielsweise als Streben ausgebildet sein, die jeweils aus der Stirnseite des Stromschienenelements herausragen.

Das Rastelement ist beispielsweise Teil einer Feder. Beispielsweise ist das Rastelement in einem Endbereich der Feder angeordnet. In dem gegenüberliegenden Endbereich kann ein weiteres Rastelement angeordnet sein. Jedes der Rastelemente kann beispielsweise als Winkel ausgebildet sein, der mit seiner Kante aus der Feder herausragt und dazu vorgesehen ist, zur Montagewand des Tragschienenelements zu weisen.

Bevorzugt sind die beiden gegenüberliegenden Rastelemente der Feder unterschiedlich ausgebildet. Beispielsweise sind die Rastelemente beide als spitzer Winkel ausgebildet, wobei die Werte der beiden Winkel unterschiedlich sind. Beispielsweise weist der eine Winkel einen Wert zwischen einschließlich 10° und einschließlich 30° auf, während der andere Winkel einen Wert zwischen einschließlich 40° und einschließlich 90° aufweist.

Weiterhin kann die Feder in einem Endbereich geschwächt sein, beispielsweise indem eine Aussparung in dem Endbereich vorgesehen ist.

Gemäß einer weiteren Ausführungsform weist das mechanische Verbindungselement Krallen auf, die dazu vorgesehen sind, in das Tragschienenelement einzugreifen, eine eventuelle vorhandene Lackierung des Tragschienenelements zu durchstoßen und das mechanische Verbindungselement so elektrisch zu erden. Beispielsweise sind die Krallen Teil der Feder. Die Krallen können an einer Seite oder an beiden Seiten der Feder herausragen und seitlich in das Tragschienenelement eingreifen.

Das mechanische Verbindungselement ist insbesondere dazu geeignet, Teil eines Stromschienenelements beziehungsweise eines Stromschienensystems zu sein. Merkmale und Ausführungen, die vorliegend lediglich in Verbindung mit dem Stromschienenelement oder dem Stromschienensystem beschrieben sind, können auch bei dem mechanischen Verbindungselement ausgebildet sein und umgekehrt.

Das mechanische Verbindungselement ist dazu vorgesehen, das Stromschienenelement mit einem weiteren Stromschienenelement mechanisch einfach verbinden und wieder lösen zu können. Beim Lösen des Stromschienenelements wird insbesondere mit Vorteil kein separates Werkzeug benötigt.

Gemäß einer Ausführungsform der Stromschiene ist das mechanische Verbindungselement mit dem Rastelement, das dem Rastelement des geschwächten Endbereichs gegenüberliegt, in das Fenster des Winkelelements an der Innenfläche der Montagewand des Tragschienenelements eingerastet. Die Vorführungen des mechanischen Verbindungselements ragen hierbei bevorzugt an einer der Stirnseiten des Stromschienenelements heraus. Die Vorführungen sind dazu vorgesehen, in ein weiteres gleichartig ausgebildetes Stromschienenelement stirnseitig einzugreifen und eine Positionierung bei dem Zusammenfügen der beiden Stromschienenelemente zu erlauben.

Bevorzugt weist das Winkelelement neben dem Fenster einen Anschlag auf. Der Anschlag ragt bevorzugt aus einer Haupterstreckungsebene des Winkelelements heraus. Bei dem Zusammenfügen der beiden Stromschienenelemente wird das eine Stromschienenelement mit den Vorführungen bevorzugt in die Stirnseite des anderen Stromschienenelements eingeschoben, bis die Kante der Verbindungswand auf den Anschlag des Winkelelements des anderen Stromschienenelements trifft. Der Anschlag und das Fenster sind derart angeordnet und ausgebildet, dass das Rastelement des mechanischen Verbindungselements in dieser Position in das Fenster des anderen Stromschienenelements eingreift. Hierbei wird bevorzugt das Rastelement an dem geschwächten Endbereich der Feder des einen Stromschienenelements mit dem Fenster des anderen Stromschienenelements verbunden. Die mechanische Verbindung zwischen den beiden Stromschienenelementen ist besonders bevorzugt reversibel ausgebildet. Beispielsweise kann die mechanische Verbindung zwischen den beiden Stromschienenelementen durch Lösen des Rastelements an dem geschwächten Endbereich aus dem Fenster wieder gelöst werden. Besonders bevorzugt wird hierzu kein zusätzliches Werkzeug benötigt. Da der Endbereich geschwächt ist, und aufgrund der oben beschriebenen Winkel der beiden Rastelemente, ist es mit Vorteil möglich, dass sich das mechanische Verbindungselement bevorzugt von dem hinzugefügten Stromschienenelement löst und nicht von dem Stromschienenelement, an das er ursprünglich montiert war.

Gemäß einer weiteren Ausführungsform des Stromschienenelements weist das mechanische Verbindungselement Ausbuchtungen an den Seitenteilen auf. Die Ausbuchtungen stehen bevorzugt mit den Seitenwänden des Tragschienenelements in direktem Kontakt. Auf diese Art und Weise kann die Positionierung von mechanischem Verbindungselement und Tragschienenelement zueinander gehalten werden.

Das hier beschriebene Stromschienenelement ist insbesondere dafür geeignet, Teil eines Stromschienensystems zu sein. Beispielsweise kann ein Stromschienensystem mindestens zwei ineinandergefügte Stromschienenelemente aufweisen oder aus zwei ineinandergefügten Stromschienenelementen bestehen. Merkmale und Ausführungen, die vorliegend in Verbindung mit dem Stromschienenelement, dem Leitungshalter und dem mechanischen Verbindungselement beschrieben sind, können auch bei dem Stromschienensystem ausgebildet sein und jeweils umgekehrt. Das Stromschienensystem weist beispielsweise eine Länge von ungefähr 1,5 Meter, von ungefähr 3 Meter oder von ungefähr 4,5 Meter auf.

Bei einer Ausführungsform eines Verfahrens zur Herstellung eines Stromschienenelements werden mindestens zwei Leitungshalter, wie sie bereits beschrieben wurden, miteinander verbunden. Die Leitungshalter sind hierbei bevorzugt gleichartig ausgebildet. Das Ineinanderstecken der Leitungshalter erfolgt beispielsweise durch Ineinanderstecken der Steckgesichter an den Stirnseiten.

Gemäß einer weiteren Ausführungsform des Verfahrens wird ein Winkelelement an jeweils einem Endbereich einer Innenfläche der Montagewand eines Tragschienenelements befestigt. Das Winkelelement weist besonders bevorzugt einen Anschlag auf.

Gemäß einer weiteren Ausführungsform des Verfahrens wird ein mechanisches Verbindungselement in das Tragschienenelement eingesteckt, bis die Kante des Verbindungselements an den Anschlag des Winkelelements anstößt. Das Winkelelement ist bevorzugt Teil einer Feder. Stößt die Kante des Verbindungselements an den Anschlag des Winkelelements an, rastet bevorzugt ein Rastelement des mechanischen Verbindungselements in ein Fenster des Winkelelements ein.

Gemäß einer weiteren Ausführungsform des Verfahrens werden die Leitungshalter an der Innenfläche der Montagewand des Tragschienenelements befestigt. Hierzu sind an einer Oberseite des Leitungshalters bevorzugt Befestigungselemente, wie beispielsweise Rasthaken, vorgesehen.

Hierbei ist es möglich, dass der Leitungshalter vor oder nach dem Einstecken des mechanischen Verbindungselements in das Tragschienenelement bis zu einem Anschlag des Winkelelements an der Innenfläche der Montagewand des Tragschienensystems befestigt wird. Folglich kann das mechanische Verbindungselement vormontiert an den Kunden geliefert werden oder von diesem nachträglich in das Stromschienenelement eingesetzt werden.

Merkmale und Ausführungsformen, die vorliegend lediglich in Verbindung mit dem Verfahren zur Herstellung eines Stromschienenelements beschrieben sind, können auch bei dem Stromschienenelement ausgebildet sein und umgekehrt.

Vorliegend sind die Stromschienenelemente insbesondere dazu geeignet, miteinander zu einem Stromschienensystem verbunden zu werden. Hierbei werden beispielsweise die Vorführungen des mechanischen Verbindungselements ineinander gesteckt und eingerastet wie oben beschrieben.

Weitere vorteilhafte Ausführungsformen und Weiterbildungen der Erfindung ergeben sich aus den im Folgenden in Verbindung mit den Figuren beschriebenen Ausführungsbeispielen.

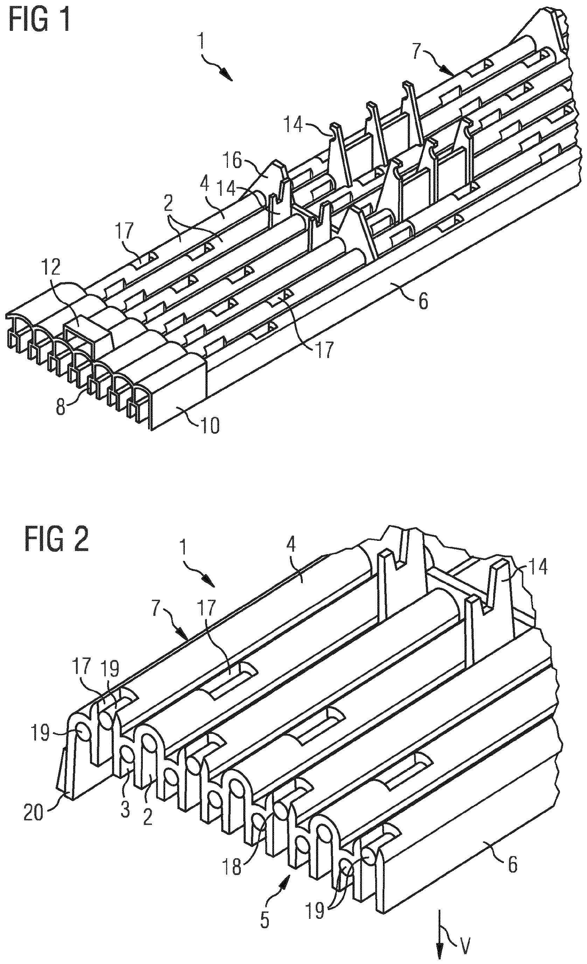

Die schematischen perspektivischen Darstellungen der Figuren 1 bis 7 zeigen einen Leitungshalter gemäß jeweils einem Ausführungsbeispiel.

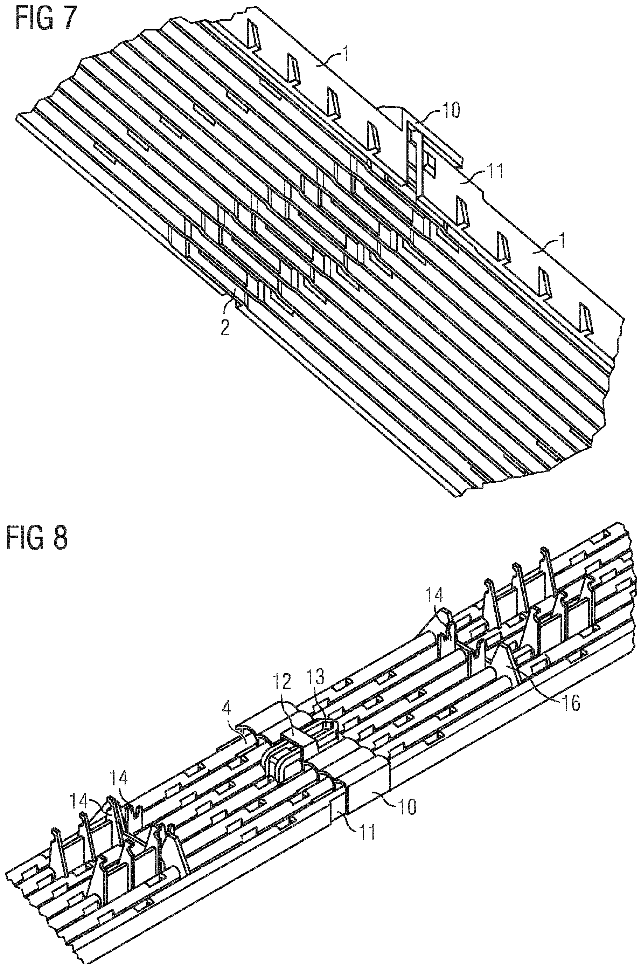

Die schematische perspektivische Darstellung der Figur 8 zeigt zwei miteinander verbundene Leitungshalter gemäß einem Ausführungsbeispiel.

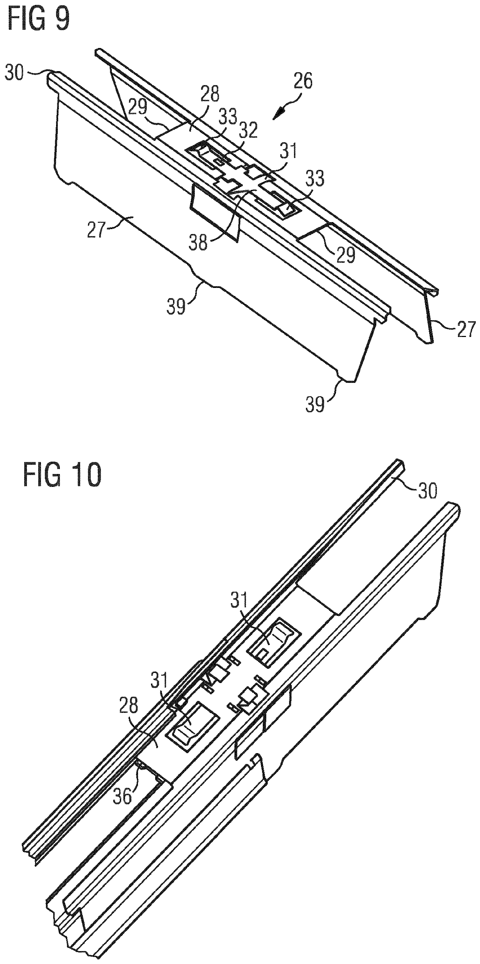

Die schematische perspektivische Darstellung der Figur 9 zeigt ein mechanisches Verbindungselement gemäß einem Ausführungsbeispiel.

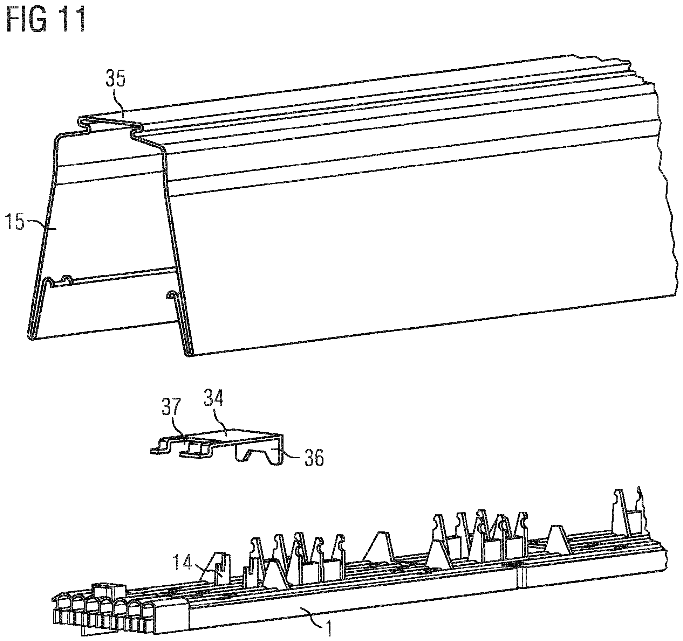

Anhand der schematischen perspektivischen Darstellungen der Figuren 10 und 11 wird ein Verfahren zur Herstellung eines Stromschienenelements näher erläutert.

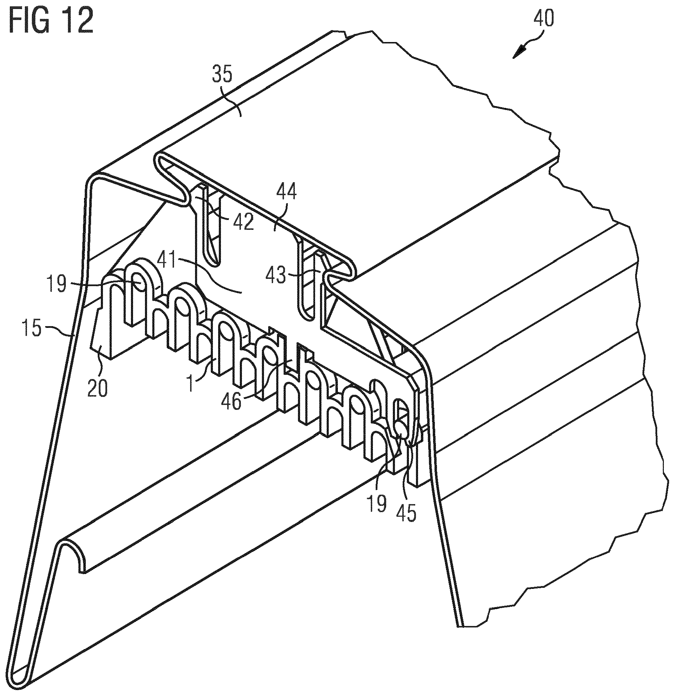

Die schematischen perspektivischen Darstellungen der Figuren 12 bis 14 zeigen Stromschienenelemente gemäß verschiedener Ausführungsbeispiele.

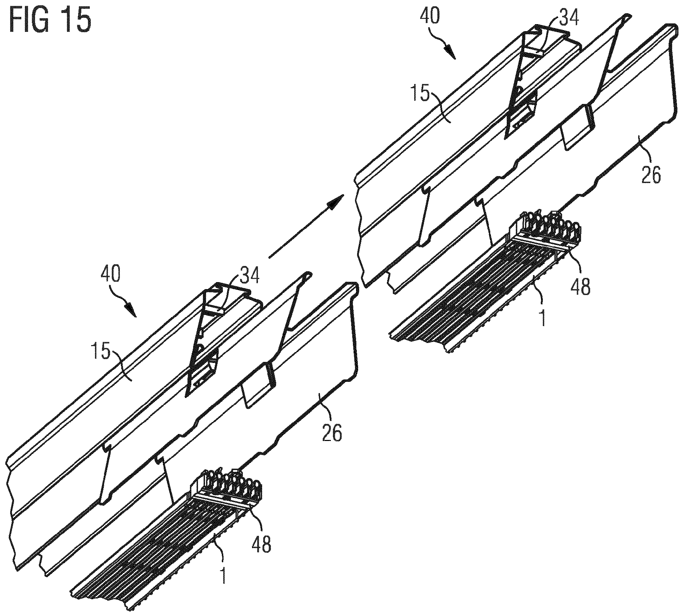

Anhand der schematischen perspektivischen Darstellung der Figuren 15 bis 20 wird ein Verfahren zur Herstellung eines Stromschienensystems näher erläutert.

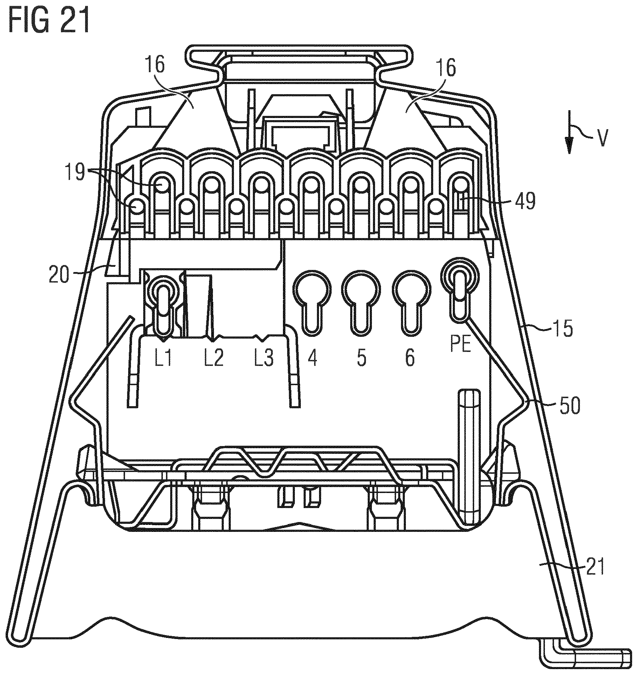

Figur 21 zeigt eine schematische Darstellung eines Stromschienensystems.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente, insbesondere Schichtdicken, zur besseren Darstellbarkeit und/oder zum besseren Verständnis übertrieben groß dargestellt sein.

Der Leitungshalter 1 gemäß dem Ausführungsbeispiel der Figur 1 weist eine Vielzahl von ersten Ausnehmungen 2 auf, die parallel zueinander in einer gemeinsamen ersten Haupterstreckungsebene angeordnet sind. Weiterhin weist der Leitungshalter 1 eine Vielzahl zweiter Ausnehmungen 3 auf, die ebenfalls in einer gemeinsamen zweiten Haupterstreckungsebene angeordnet sind, wobei die erste Haupterstreckungsebene und die zweite Haupterstreckungsebene parallel zueinander verlaufen, aber voneinander verschieden sind. Die erste Haupterstreckungsebene der ersten Ausnehmungen 2 und die zweite Haupterstreckungsebene der zweiten Ausnehmungen 3 zusammen mit den ersten Ausnehmungen 2 und den zweiten Ausnehmungen 3 werden weiter unten, insbesondere in Verbindung mit Figur 2, näher erläutert.

Der Leitungshalter 1 gemäß dem Ausführungsbeispiel der Figur 1 weist eine Oberseite 4 auf und eine Unterseite 5, die der Oberseite 4 gegenüberliegt. Außerdem weist der Leitungshalter 1 zwei einander gegenüberliegende Seitenflächen 6, 7 auf, die sich entlang der ersten Haupterstreckungsebene der ersten Ausnehmungen 2 und entlang der zweiten Haupterstreckungsebene der zweiten Ausnehmungen 3 erstrecken und auf der Oberseite 4 und der Unterseite 5 des Leitungshalters 1 senkrecht stehen. Außerdem umfasst der Leitungshalter 1 zwei Stirnseiten 8, 9, die den Leitungshalter 1 an seinen Endbereichen begrenzen.

An einer der Stirnseiten 8 des Leitungshalters 1 ist ein erstes Steckgesicht 10 angeordnet. Das erste Steckgesicht 10 ist als Steckstruktur ausgebildet, die dazu geeignet ist, mit einem zweiten Steckgesicht 11, das an der gegenüberliegenden Stirnseite 9 des Leitungshalters 1 angeordnet ist (nicht dargestellt), durch Ineinanderstecken mechanisch verbunden zu werden.

Auf einer Oberseite des ersten Steckgesichts 10 ist eine Aufnahme 12 angeordnet, die dazu geeignet ist, einen Schnapphaken 13 aufzunehmen. Weiterhin sind an der Oberseite 4 des Leitungshalters 1 Befestigungselemente 14 angeordnet, die als Rasthaken ausgebildet sind. Die Rasthaken sind dazu vorgesehen, in Ausnehmungen eines Tragschienenelements 15 befestigt zu werden. Zudem sind an der Oberseite 4 des Leitungshalters 1 Positionierhilfen 16 angeordnet, die dazu dienen, die Höhe des Leitungshalters 1 innerhalb des Tragschienenelements 15 bei der Montage festzulegen.

Die Steckstruktur des ersten Steckgesichts 10 weist stirnseitige Konturen auf, die in einer gemeinsamen Ebene liegen. Eine stirnseitige Außenfläche des ersten Steckgesichts 10 ist vorliegend frei von Vorsprüngen, die aus der Haupterstreckungsebene des Leitungshalters 1 herausragen. Die stirnseitige Außenfläche des ersten Steckgesichts 10 bildet vorliegend zusammen mit einer Stirnseite der Aufnahme 12 die Stirnseite 8 des Leitungshalters 1 aus. Die Stirnseite 8 des Leitungshalters 1 ist vorliegend frei von Vorsprüngen, die in Richtung der Haupterstreckungsebene aus der Stirnseite 8 herausragen.

Das erste Steckgesicht 10 weist eine Dachfläche auf, die von der einen Seitenfläche 6 des Leitungshalters 1 zu der anderen Seitenfläche 7 an der Oberseite 4 des Leitungshalters 1 verläuft. Die Dachfläche ist hierbei vollständig frei von Öffnungen und schließt einen Innenraum des ersten Steckgesichts 10 von der Oberseite des Leitungshalters ab. Der Innenraum des ersten Steckgesichts 10 ist vorliegend nur von der Unterseite 5 des Leitungshalters 1 von außen frei zugänglich.

Der Leitungshalter 1 gemäß dem Ausführungsbeispiel der Figur 1 ist bevorzugt einstückig als Spritzgussteil ausgebildet. Wände der Ausnehmungen 2, 3 des Leitungshalters 1 weisen Durchbrüche 17 auf, die die Verwendung eines Spritzgusswerkzeugs ermöglichen, mit dem Nasen 18 an der Innenfläche der Durchbrüche 17 zur Befestigung von elektrischen Leitungen 19 in den Ausnehmungen 2, 3 des Leitungshalters 1 gefertigt werden können. Dies wird weiter unten beispielsweise anhand Figur 2 näher erläutert.

Figur 2 zeigt perspektivisch einen weiteren Ausschnitt des Leitungshalters 1 gemäß dem Ausführungsbeispiel der Figur 1, wobei das erste Steckgesicht 10 vorliegend nicht dargestellt ist, sodass die Ausnehmungen 2, 3 des Leitungshalters 1 besser erkennbar sind.

Die erste Haupterstreckungsebene der ersten Ausnehmungen ist in einer vertikalen Richtung v, die von der Oberseite 4 des Leitungshalters 1 zu seiner Unterseite 5 verläuft, von der zweiten Haupterstreckungsebene beabstandet angeordnet, sodass die ersten Ausnehmungen 2 in der ersten Haupterstreckungsebene näher an der Oberseite 4 des Leitungshalters 1 angeordnet sind als die zweiten Ausnehmungen 3 in der zweiten Haupterstreckungsebene. Die ersten Ausnehmungen 2 des Leitungshalters 1 in der ersten Haupterstreckungsebene und die zweiten Ausnehmungen 3 in der zweiten Haupterstreckungsebene sind vorliegend alternierend angeordnet. Mit anderen Worten ist jeweils eine erste Ausnehmung 2 direkt benachbart zu einer zweiten Ausnehmung 3 angeordnet.

In den Ausnehmungen 2, 3 sind vorliegend elektrische Leitungen 19, beispielsweise blanke Kupferdrähte, eingebracht. Aufgrund der ersten Ausnehmungen 2 und der zweiten Ausnehmungen 3, deren Wände aus einem elektrisch isolierenden Material, wie einem Kunststoff, gebildet sind, sind die elektrischen Leitungen 19 voneinander elektrisch isoliert. Da die ersten Ausnehmungen 2 und die zweiten Ausnehmungen 3 einen Abstand in der vertikalen Richtung v zueinander aufweisen, ist es möglich, Luft- und Kriechstrecken, die beispielsweise gesetzlich durch DIN-Normen vorgegeben sein können, einzuhalten.

Die Wände der Ausnehmungen 2, 3 weisen weiterhin die Durchbrüche 17 auf, die die Wand jeweils vollständig durchdringen. Mit anderen Worten sind bei dem vorliegenden Ausführungsbeispiel die elektrischen Leitungen 19, die innerhalb der Ausnehmungen 2, 3 angeordnet sind, durch die Durchbrüche 17 von der Oberseite 4 frei zugänglich. Weiterhin weisen die Ausnehmungen 2, 3 die Nasen 18 auf, die an der Innenfläche der Wand im Bereich der Durchbrüche 17 angeordnet sind. Die Nasen 18 dienen zur Halterung der elektrischen Leitungen 19 in den Ausnehmungen 2, 3. Aufgrund der Durchbrüche 17 können die Nasen 18 mit Hilfe eines Spritzgusswerkzeugs gefertigt werden, das keine Hinterschnitte aufweist.

An einer Seitenfläche 7 des Leitungshalters 1 ist ein Justageelement 20 angeordnet, das in der vertikalen Richtung v verläuft und dazu geeignet ist, eine falsche Montage eines Funktionseinsatzes 21 in den Leitungshalter 1 zu verhindern.

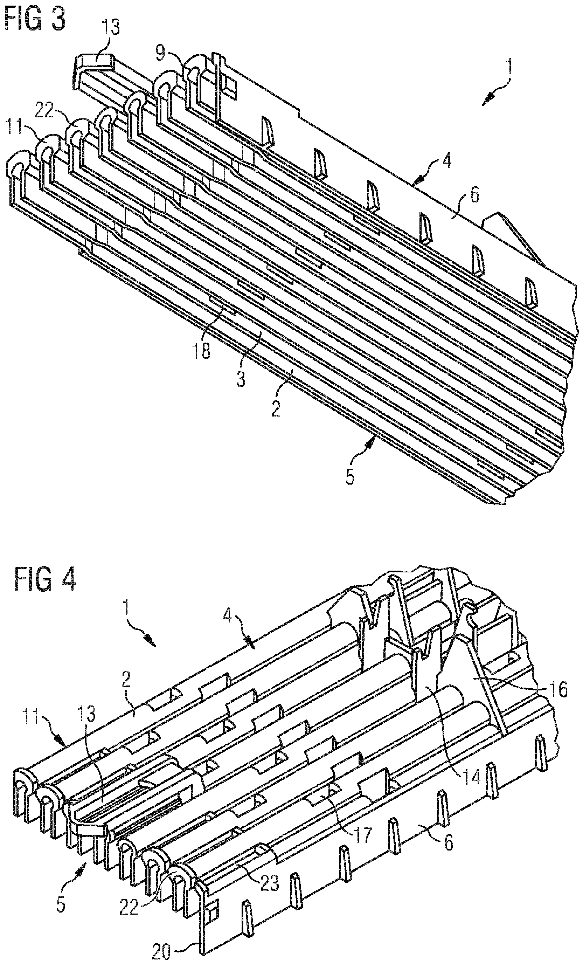

Figur 3 zeigt eine schematische perspektivische Darstellung des Leitungshalters 1 gemäß den Figuren 1 bis 2 von der Unterseite 5 des Leitungshalters 1 her. Hierbei ist die Stirnseite 9 des Leitungshalters 1 gezeigt, die der Stirnseite 8 der Figur 1 gegenüberliegt. Der Leitungshalter 1 weist an dieser Stirnseite 9 das zweite Steckgesicht 11 auf, das dazu geeignet ist, mit dem ersten Steckgesicht 10 mechanisch verbunden zu werden.

Das zweite Steckgesicht 11 weist Steckstrukturen auf, die als Ausnehmungen ausgebildet sind. Bevorzugt setzen die Ausnehmungen in dem zweiten Steckgesicht 11, die Ausnehmungen in dem Leitungshalter 1 kontinuierlich fort, so dass durchgehend elektrische Leitungen 19 in den Ausnehmungen eingebracht werden können.

Das zweite Steckgesicht 11 weist Führungen 22 auf, die sich entgegen der vertikalen Richtung v erstrecken. Die Führungen 22 sind dazu vorgesehen, die Steckstrukturen des zweiten Steckgesichts 11 in den Steckstrukturen des ersten Steckgesichts 10 zu führen. Weiterhin ist an der Oberseite des zweiten Steckgesichts 11 der Schnapphaken 13 angeordnet, der über das zweite Steckgesicht 11 hinaus ragt. Der Schnapphaken 13 ist dazu geeignet, in die Aufnahme 12 an der Oberseite des ersten Steckgesichts 10 eingeschnappt zu werden.

Figur 4 zeigt eine perspektivische Darstellung auf der Stirnseite 9 des Leitungshalters 1, die das zweite Steckgesicht 11 umfasst. In dem zweiten Steckgesicht 11 sind auf der Oberseite Schlitze 23 vorgesehen, die entlang der Ausnehmungen 2, 3 verlaufen. Die Schlitze 23 erlauben bevorzugt eine gleitende Verbindung mit dem ersten Steckgesicht 10, das beispielsweise von einem weiteren Leitungshalter 1 umfasst ist.

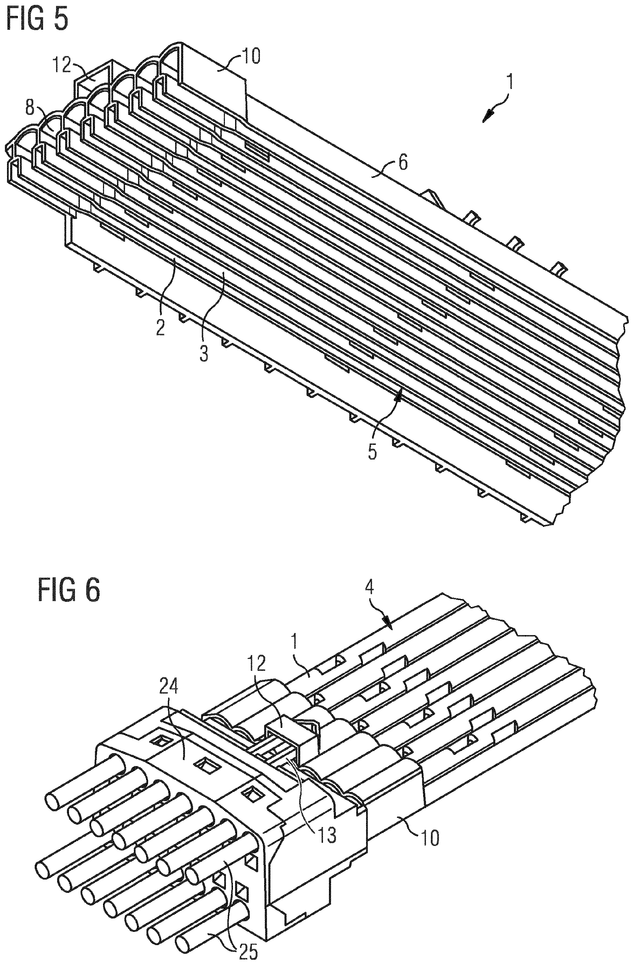

Figur 5 zeigt eine perspektivische schematische Darstellung des Leitungshalters 1 von einer Unterseite 5 her auf das erste Steckgesicht 10. Das erste Steckgesicht 10 weist Steckstrukturen auf, die die Ausnehmungen 2, 3 des Leitungshalters 1 kontinuierlich fortsetzen. An der Oberseite des Steckgesichts 10 ist die Aufnahme 12 für den Schnapphaken 13 zu sehen.

Figur 6 zeigt einen Leitungshalter 1 gemäß einem Ausführungsbeispiel, bei dem auf die Stirnseite 8 ein Einspeiser 24 aufgesetzt ist. Der Einspeiser 24 ist dazu vorgesehen, die elektrischen Leitungen 19 in dem Leitungshalter 1 mit externen elektrischen Leitungen 25 elektrisch leitend zu verbinden. Der Einspeiser 24 weist hierbei den Schnapphaken 13 auf, der in die Aufnahme 12 auf dem ersten Steckgesicht 10 an der Oberseite 4 des Leitungshalters 1 eingeklippst ist.

Figur 7 zeigt eine schematische perspektivische Darstellung zweier Leitungshalter 1, wobei das erste Steckgesicht 10 des einen Leitungshalters 1 in das zweite Steckgesicht 11 des anderen Leitungshalters 1 eingesteckt ist. Das erste Steckgesicht 10 und das zweite Steckgesicht 11 sind hierbei verschieden voneinander ausgebildet und aus Steckstrukturen gebildet, die bündig ineinander passen. Die elektrischen Leitungen 19 können hierbei die Ausnehmungen 2, 3 von dem einem Leitungshalter 1 zu dem anderen Leitungshalter 1 vollständig durchlaufen. Bevorzugt sind die Leitungshalter 1 eines gemeinsamen Tragschienenelements 15 derart verbunden.

Figur 8 zeigt schematisch zwei über die Steckgesichter 10, 11 an ihren Stirnseiten 8, 9 ineinander gesteckte Leitungshalter 1.

Das mechanische Verbindungselement 26 gemäß dem Ausführungsbeispiel der Figur 9 weist zwei Seitenteile 27 und eine Verbindungswand 28 auf, die die beiden Seitenteile 27 in einem Mittelbereich an einer Oberseite des mechanischen Verbindungselements 26 miteinander verbindet. Die Verbindungswand 26 steht hierbei im Wesentlichen senkrecht auf den beiden Seitenteilen 27. Die Seitenteile 27 des mechanischen Verbindungselements 26 sind vorliegend derart angeordnet, dass sie ausgehend von der Verbindungwand 28 aus V-förmig auseinanderlaufen. Die Seitenteile 27 des mechanischen Verbindungselements 26 ragen seitlich symmetrisch über die Verbindungswand 28 hinaus, so dass eine Kante 29 der Verbindungswand 28 zurückversetzt zwischen den beiden Seitenteilen 27 angeordnet ist. Die Seitenteile 27 sind an einer Oberkante mit strebenartigen Vorführungen 30 versehen, die jeweils über die Seitenteile 27 symmetrisch hinausragen.

Die Verbindungswand 28 weist weiterhin Ausbuchtungen 39 an den Seitenteilen 27 auf, die dazu vorgesehen sind, die Position zu dem Tragschienenelement 15 festzulegen.

Die Verbindungswand 28 des mechanischen Verbindungselements 26 umfasst weiterhin eine Feder 31. Die Feder 31 weist hierbei in einem Endbereich eine Aussparung 32 auf, die dazu vorgesehen ist, die Feder 31 auf dieser Seite zu schwächen.

Weiterhin weist die Feder 31 an den beiden gegenüberliegenden Endbereichen jeweils ein Rastelement 33 auf. Die Rastelemente 33 sind vorliegend aus zwei Flächen gebildet. Hierbei weisen die Flächen des einen Rastelements 33 einen geringeren Winkel auf als die Flächen des anderen Rastelements 33. Die Rastelemente 33 sind dazu vorgesehen, in ein Winkelelement 34 auf einer Innenfläche einer Montagewand 35 des Tragschienenelements 15 einzurasten.

Figur 10 zeigt das mechanische Verbindungselement 26 der Figur 9 in Verbindung mit einem Winkelelement 34, das an der Montagewand 35 eines Tragschienenelements 15 angeordnet ist. Das Winkelelement 34 weist einen Anschlag 36 auf. Das mechanische Verbindungselement 26 wird mit der Verbindungswand 28 so weit in das Tragschienenelement 15 hineingeschoben, dass die Kante 29 der Verbindungswand 28 an dem Anschlag 36 anstößt und das Rastelement 33 der Feder 31 in ein Fenster 37 des Winkelelements 34 einrasten kann. Außerdem weist das mechanische Verbindungselement 26 eine Kralle 38 auf, über das das mechanische Verbindungselement 26 geerdet werden kann.

Wie in Figur 11 gezeigt, werden bei einem Verfahren zur Herstellung eines Stromschienenelements 40 mindestens zwei Leitungshalter 1 ineinander gesteckt, wie beispielsweise anhand der Figuren 7 und 8 bereits beschrieben wurde. An der Innenfläche der Montagewand 35 des Tragschienenelements 15 wird das Winkelelement 34 befestigt. Das Winkelelement 34 weist den Anschlag 36 und das Fenster 37 auf. Über das Winkelelement 34 kann das mechanische Verbindungselement 26, wie bereits anhand der Figuren 9 und 10 erläutert, eingerastet werden.

Der Leitungshalter 1 wird mit den Befestigungselementen 14, wie etwa Rasthaken, mit seiner Oberseite an die Montagewand 35 des Tragschienenelements 15 eingedrückt. Die Ausnehmungen 2, 3 des Leitungshalters 1 sind mit den elektrischen Leitungen 19, wie etwa Kupferdrähten, versehen.

Das Stromschienenelement 40 gemäß dem Ausführungsbeispiel der Figur 12 weist eine Erdungsfeder 41 auf. Die Erdungsfeder 41 ist zwischen der Oberseite 4 des Leitungshalters 1 und der Montagewand 35 angeordnet.

Die Erdungsfeder 41 umfasst einen ersten Kontaktierungsbereich 42 und einen zweiten Kontaktierungsbereich 43, die zu der Innenfläche der Montagewand 35 weisen. Der erste Kontaktierungsbereich 42 und der zweite Kontaktierungsbereich greifen in einen S-förmig geschwungenen Bereich und einen spiegelsymmetrisch zu dem S-förmig ausgebildeten Bereich der Montagewand 35 ein. Der erste Kontaktbereich 42 und der zweite Kontaktbereich 43 weisen hierbei jeweils eine scharfkantige Kontur, beispielsweise mit Spitzen (nicht dargestellt) auf, die eine elektrisch isolierende Lackierung des Tragschienenelements 15 durchstößt und so eine elektrisch leitende Verbindung zu dem Tragschienenelement 15 herstellt.

Weiter weist die Erdungsfeder 41 einen zentralen Bereich 44 auf, der zwischen dem ersten Kontaktierungsbereich 42 und dem zweiten Kontaktierungsbereich 43 angeordnet ist und ebenfalls zu der Montagewand 35 weist. Der zentrale Bereich 44 der Erdungsfeder 41 steht mit der Montagewand 35 des Tragschienenelements 15 nicht in direktem Kontakt.

Die Erdungsfeder 41 weist außerdem einen dritten Kontaktierungsbereich 45 auf, der vorliegend als offene Öse ausgebildet ist. Der als offene Öse ausgebildete dritte Kontaktierungsbereich 45 umschließt eine elektrische Leitung 19, die in einer randseitigen Ausnehmung 2, 3 des Leitungshalters 1 angeordnet ist, teilweise. Hierbei wird über den physikalischen Kontakt zwischen der Öse und der elektrischen Leitung 19 ein elektrischer Kontakt hergestellt.

Weiterhin weist die Erdungsfeder 41 ein weiteres Montageelement auf, das in eine oberseitige Ausnehmung des Leitungshalters 1 eingreift und so die Erdungsfeder 41 mechanisch stabilisiert.

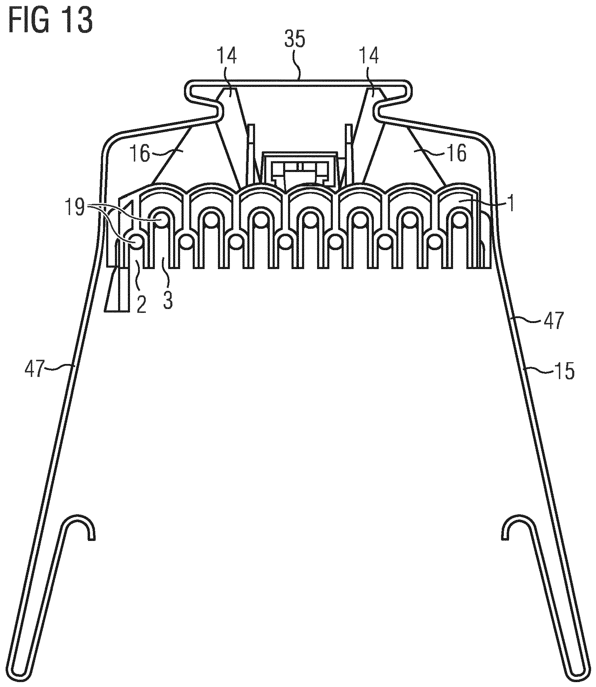

Das Stromschienenelement 40 gemäß dem Ausführungsbeispiel der Figur 13 weist den Leitungshalter 1 mit einem Justageelement 20 auf. Das Justageelement 20 erstreckt sich entlang der Seitenwand 6, 7 des Tragschienenelements 15. Das Justageelement 40 verhindert, dass der Funktionseinsatz 21 falsch herum in das Stromschienenelement 40 eingesetzt werden kann. Hierzu weist der Funktionseinsatz 21 eine entsprechende Form auf.

Weiterhin zeigt das Ausführungsbeispiel der Figur 13, dass Seitenwände 47 des Tragschienenelements 15 zumindest teilweise V-förmig ausgebildet sein können. Dies erleichtert die Positionierung der Leitungshalter 1 in dem Tragschienenelement 15.

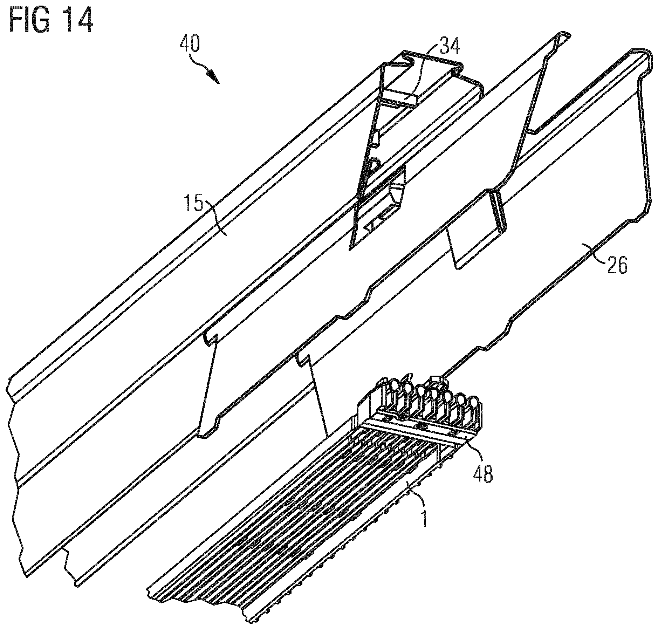

Figur 14 zeigt ein Stromschienenelement 40 gemäß einem Ausführungsbeispiel mit dem Tragschienenelement 15, dem mechanischen Verbindungselement 26 und mindestens zwei Leitungshaltern 1, wobei an einer Stirnseite des Stromschienenelements 40 ein elektrisches Verbindungselement 48 angeordnet ist. Das elektrische Verbindungselement 48 ist dazu vorgesehen, mit dem Leitungshalter 1 eines weiteren Stromschienenelements 40 verbunden zu werden. Außerdem weist das Stromschienenelement 40 gemäß der Figur 14 Vorführungen 30 des mechanischen Verbindungselements 26 auf, die aus der Stirnseite des Stromschienenelements 40 herausragen und die Positionierung des Stromschienenelements 40 zu einem weiteren Stromschienenelement 40 bei deren Verbindung stabilisieren.

Bei dem Verfahren zur Herstellung eines Stromschienensystems gemäß dem Ausführungsbeispiel der Figur 15 werden zwei gleichartig ausgebildete Stromschienenelemente 40, wie sie beispielsweise anhand der Figuren 12 bis 14 bereits beschrieben wurden, miteinander verbunden. Hierzu weist jedes der Stromschienenelemente 40 die Vorführungen 30 des mechanischen Verbindungselements 26 auf. Das mechanische Verbindungselement 26 des einen Stromschienenelements 40 wird in das Tragschienenelement 15 des anderen Stromschienenelements 40 eingeschoben, bis die Kante 29 der Verbindungswand 28 des mechanischen Verbindungselements 26 an den Anschlag 36 des Winkelelements 34 der anderen Tragschiene 15 anschlägt und das Rastelelement 33 der Feder 31 auf deren geschwächter Seite in das Fenster 37 des Winkelelements 34 der zu verbindenden Tragschiene 15 einrastet. Sollen zwei Stromschienenelemente 40 wieder voneinander gelöst werden, so kann zunächst das elektrische Verbindungselement 48 durch Ziehen nach unten entfernt werden und dann das mechanische Verbindungselement 26 aus der Tragschiene 15 gelöst werden. Auf diese Art und Weise kann die Stirnwand des Stromschienenelements 40 mit dem elektrischen Verbindungselement 48 bündig ausgebildet werden.

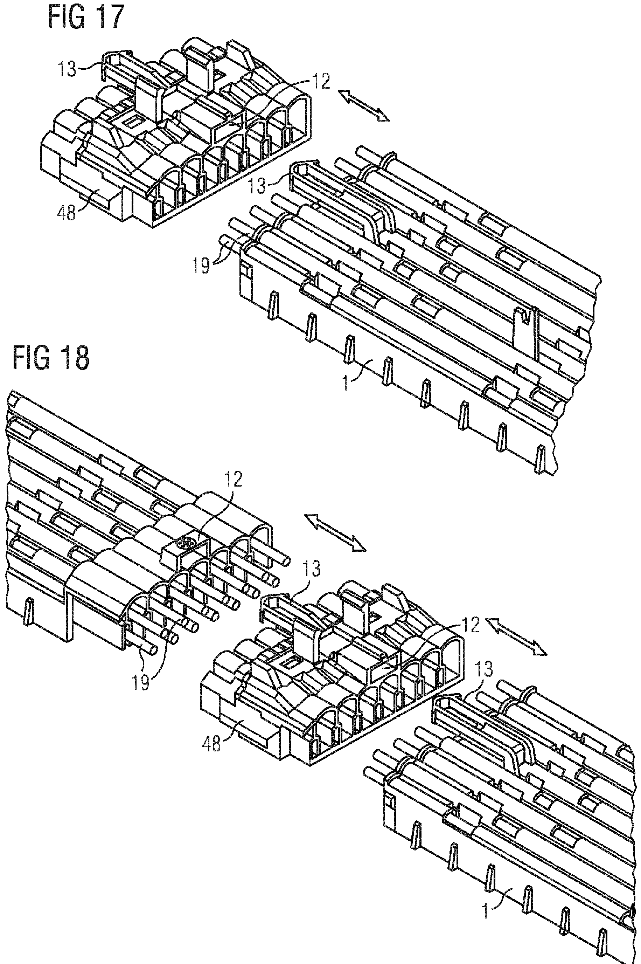

Zur Verbindung der Leitungshalter 1 eines anderen Stromschienenelements 40 weist jedes Stromschienenelement 40 bevorzugt ein elektrisches Verbindungselement 48 auf. Die Verbindung zweier Leitungshalter 1 über das elektrische Verbindungselement 48 wird im Folgenden mit Hilfe der Figuren 17 bis 20 näher erläutert.

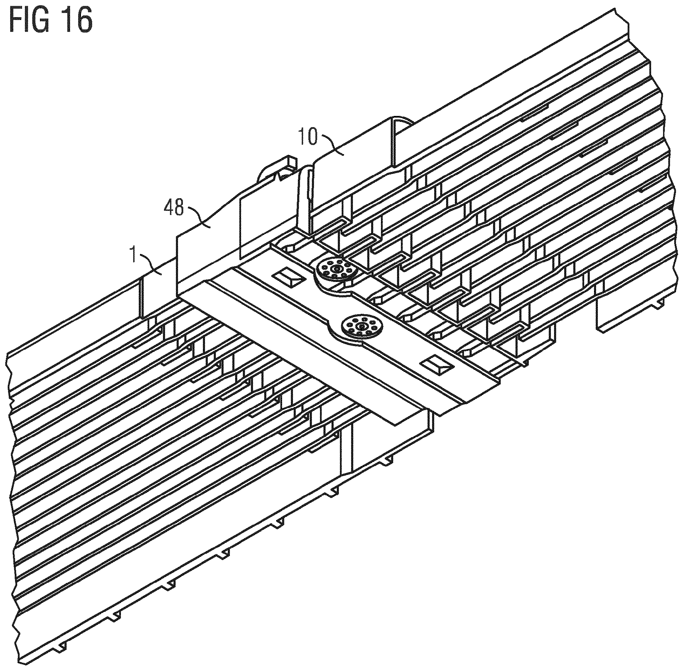

Figur 16 zeigt eine schematische perspektivische Darstellung zweier Leitungshalter 1, die mit einem elektrischen Verbindungselement 48 miteinander verbunden sind. Hierbei greift das erste Steckgesicht 10 des einen Leitungshalters 1 in eine Stirnseite des elektrischen Verbindungselements 48 und das zweite Steckgesichts 11 des anderen Leitungshalters 1 in die andere Stirnseite des elektrischen Verbindungselements 48 ein. Das elektrische Verbindungselement 48 ist innerhalb des Stromschienenelements 40, das mehrere Leitungshalter 1 aufweist, an einem der Leitungshalter 1 befestigt, die an der Stirnseite des Tragschienenelements 15 zugänglich sind. Das elektrische Verbindungselement 48 ist dazu vorgesehene, beim Zusammensetzen verschiedener Stromschienenelemente 40 zu einem Stromschienensystem, die Leitungshalter 1 der beiden zu verbindenden Stromschienenelemente 40 miteinander zu verbinden.

Das Aufsetzen des elektrischen Verbindungselements 48 auf den Leitungshalter 1 ist noch einmal in Figur 17 gezeigt. Der Leitungshalter 1 wird mit der Stirnseite, die das zweite Steckgesicht 11 mit dem Schnapphaken 13 an der Oberseite aufweist, in die Stirnseite des elektrischen Verbindungselements 48 gesteckt, das stirnseitig das erste Steckgesicht 10 aufweist, an dessen Oberseite die Aufnahme 12 für den Schnapphaken 13 angebracht ist. Auf der gegenüberliegenden Stirnseite des elektrischen Verbindungselements 48 ist das erste Steckgesicht 10 angeordnet, das auf der Oberseite einen weiteren Schnapphaken 13 aufweist.

Wie in Figur 18 schematisch dargestellt ist, kann das elektrische Verbindungselement 48 mit dem zweiten Steckgesicht 11 in das erste Steckgesicht 10 eines weiteren Leitungshalters 1 eingebracht werden und über den Schnapphaken 13 an der Oberseite des elektrischen Verbindungselements 48 in die Aufnahme 12 an der Oberseite des ersten Steckgesichts 10 des Leitungshalters 1 verbunden werden.

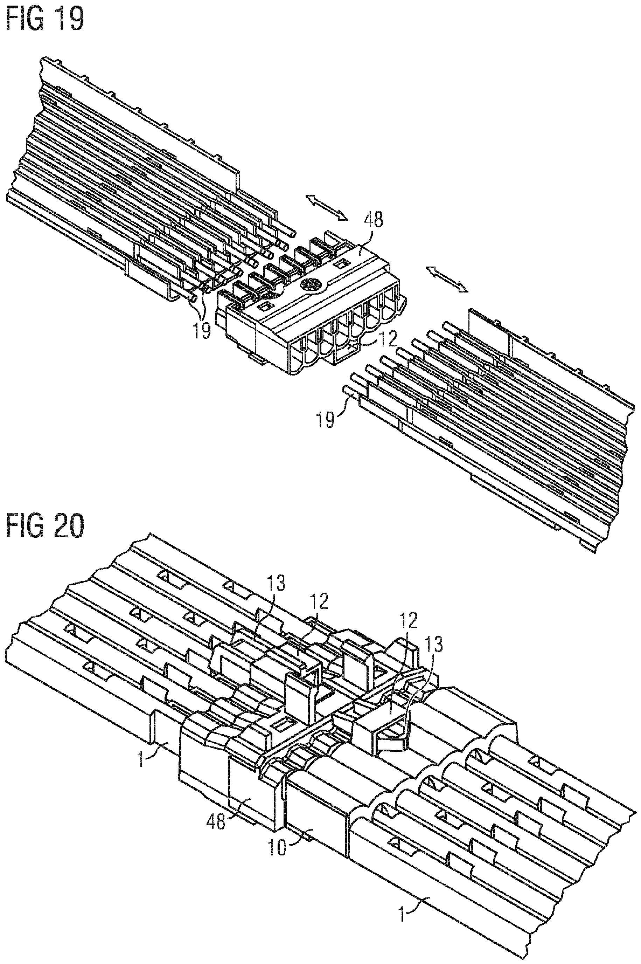

Figur 19 zeigt die Verbindung zweier Leitungshalter 1 über ein elektrisches Verbindungselement noch einmal von der Unterseite 5 der Leitungshalter 1 her. Die elektrischen Leitungen 19 sind hierbei von der Unterseite 4 der Leitungshalter 1 von außen zugänglich, verlaufen in dem elektrischen Verbindungselement 48 jedoch abgeschlossen, da das elektrische Verbindungselement 48 eine abgeschlossene Unterseite aufweist.

Figur 20 zeigt zwei Leitungshalter 1, die miteinander durch das elektrische Verbindungselement 48 verbunden sind. Hierbei greift der Schnapphaken 13 an der Oberseite 4 des einen Leitungshalters 1 in die Aufnahme 12 an der Oberseite des elektrischen Verbindungselements 48 und der Schnapphaken 13 an der Oberseite des elektrischen Verbindungselements 48 in die Aufnahme 12 an der Oberseite 4 des anderen Leitungshalter 1 mechanisch stabil ein.

Figur 21 zeigt eine schematische Draufsicht auf die Stirnseite eines Stromschienensystems. Das Stromschienensystem ist aus mehreren Stromschienenelementen 40 zusammengesetzt. Das Stromschienensystem weist den Funktionseinsatz 21 auf, der vorliegend als Leuchteneinsatz ausgebildet ist. Der Leuchteneinsatz kann hierbei über ein elektrisches Abgriffelement 49, das entgegen der vertikalen Richtung v verläuft, einfach in die Ausnehmungen 2, 3 des Leitungshalters 1 eingesetzt und elektrisch kontaktiert werden. Weiterhin ist ein Verschlussriegel 50 vorgesehen, der den Leuchteneinsatz in dem Stromschienenelement 40 befestigt.

Der Funktionseinsatz 21 weist hierbei eine Form auf, so dass der Funktionseinsatz 21 aufgrund des Justageelements 20 nur richtig herum in die Tragschiene 15 eingesetzt werden kann.

Die vorliegende Anmeldung beansprucht die Priorität der deutschen Anmeldung DE 102017125225.8, deren Offenbarungsgehalt hiermit durch Rückbezug aufgenommen wird.

Die Erfindung ist nicht durch die Beschreibung anhand der Ausführungsbeispiele auf diese beschränkt.

### Bezugszeichenliste

- 1: Leitungshalter
- 2: erste Ausnehmung
- 3: zweite Ausnehmung
- 4: Oberseite des Leitungshalters
- 5: Unterseite des Leitungshalters
- 6, 7: Seitenflächen des Leitungshalters
- 8, 9: Stirnseiten des Leitungshalters
- 10: erstes Steckgesicht
- 11: zweites Steckgesicht
- 12: Aufnahme für einen Schnapphaken
- 13: Schnapphaken
- 14: Befestigungselement
- 15: Tragschienenelement
- 16: Positionierhilfe
- 17: Durchbruch
- 18: Nase
- 19: elektrische Leitung
- 20: Justageelement
- 21: Funktionseinsatz
- 22: Führung
- 23: Schlitz
- 24: Einspeiser
- 25: externe elektrische Leitung
- 26: mechanisches Verbindungselement
- 27: Seitenteil des mechanischen Verbindungselements
- 28: Verbindungswand des mechanischen Verbindungselements
- 29: Kante der Verbindungswand
- 30: Vorführung
- 31: Feder
- 32: Aussparung
- 33: Rastelement
- 34: Winkelelement
- 35: Montagewand
- 36: Anschlag
- 37: Fenster
- 38: Kralle
- 39: Ausbuchtung
- 40: Stromschienenelement
- 41: Erdungsfeder
- 42: erster Kontaktierungsbereich
- 43: zweiter Kontaktierungsbereich
- 44: zentraler Bereich
- 45: dritter Kontaktierungsbereich
- 46: Montageelement
- 47: Seitenwand des Tragschienenelements
- 48: elektrisches Verbindungselement
- 49: elektrisches Abgriffelement
- 50: Verschlussriegel
- V: vertikale Richtung

## Patentansprüche

1. Leitungshalter (1) für ein Stromschienensystem mit:
- einer Vielzahl parallel zueinander angeordneten ersten Ausnehmungen (2),
- einer Vielzahl parallel zueinander angeordneten zweiten Ausnehmungen (3), wobei
- die ersten Ausnehmungen (2) und die zweiten Ausnehmungen (3) zur Aufnahme elektrischer Leitungen (19) vorgesehen sind,
- die ersten Ausnehmungen (2) in einer ersten Haupterstreckungsebene liegen und die zweiten Ausnehmungen (3) in einer zweiten Haupterstreckungsebene liegen, und
- die erste Haupterstreckungsebene und die zweite Haupterstreckungsebene in einer vertikalen Richtung (v), die senkrecht auf den Haupterstreckungsebenen steht, beabstandet voneinander angeordnet sind,
wobei der Leitungshalter zwei gegenüberliegende Stirnseiten aufweist, wobei an der einen Stirnseite ein erstes Steckgesicht (10) und an der anderen Stirnseite eine zweites Steckgesicht (11) angeordnet ist,
**dadurch gekennzeichnet, dass**
Schlitze (23) auf einer Oberseite des zweiten Steckgesichts (11) vorgesehen sind, die entlang der Ausnehmungen (2, 3) verlaufen und eine gleitende Verbindung mit dem ersten Steckgesicht (10) eines weiteren Leitungshalters (1) erlauben.

2. Leitungshalter (1) nach dem vorherigen Anspruch,
bei dem die ersten Ausnehmungen (2) und die zweiten Ausnehmungen (3) in einer horizontalen Richtung alternierend angeordnet sind.

3. Leitungshalter (1) nach einem der obigen Ansprüche, der an einem Endbereich einer Oberseite (4) einen Schnapphaken (13) und an einem gegenüberliegenden Endbereich der Oberseite (4) eine Aufnahme (12) für den Schnapphaken (13) aufweist.

4. Leitungshalter (1) nach einem der obigen Ansprüche, bei dem Wände der Ausnehmungen (2, 3) Durchbrüche (17) aufweisen, wobei im Bereich eines Durchbruchs (17) Nasen (18) an den Innenseiten der Wand ausgebildet sind, die zur Befestigung der elektrischen Leitungen (19) vorgesehen sind.

5. Leitungshalter (1) nach einem der obigen Ansprüche mit einem Justageelement (20), das an einer Seitenfläche (6, 7) des Leitungshalters (1) angeordnet ist und über eine Unterseite (5) des Leitungshalters (1) hinausragt.

6. Stromschienenelement (40) mit:
- einem Tragschienenelement (15), das zwei gegenüberliegende Seitenwände (47) und eine Montagewand (35) aufweist, und
- mindestens einem Leitungshalter (1) nach einem der oben genannten Ansprüche, wobei
- die Haupterstreckungsebenen des Leitungshalters (1) entlang der Montagewand (35) des Tragschienenelements (15) angeordnet sind, und
- Öffnungen der Ausnehmungen (2, 3) in die vertikale Richtung (v) weisen.

7. Stromschienenelement (40) nach dem vorherigen Anspruch, mit einem Funktionseinsatz (21), der ein elektrisches Abgriffelement (49) aufweist, wobei das elektrische Abgriffelement (49) parallel zur vertikalen Richtung (v) angeordnet ist und in die Öffnungen eingreift.

8. Stromschienenelement (40) nach einem der Ansprüche 6 bis 7, das eine Erdungsfeder (41) zwischen der Montagewand (35) und dem Leitungshalter (1) aufweist, wobei die Erdungsfeder (41) das Tragschienenelement (15) erdet.

9. Stromschienenelement (40) nach einem der Ansprüche 6 bis 8,
bei dem die Erdungsfeder (41) einen ersten Kontaktierungsbereich (42) mit einer scharfkantigen Kontur aufweist, die eine elektrisch isolierende Beschichtung des Tragschienenelements (15) durchdringen, so dass die Erdungsfeder (41) mit dem Tragschienenelement (15) elektrisch leitend verbunden ist.

10. Stromschienenelement (40) nach dem vorherigen Anspruch, bei dem die Erdungsfeder (41) eine Öse als dritten Kontaktierungsbereich (45) aufweist, die eine elektrische Leitung (19) zumindest teilweise umschließt und mit der elektrischen Leitung (19) elektrisch leitend verbunden ist.

11. Stromschienenelement (40) nach einem der Ansprüche 6 bis 10, bei dem ein Leitungshalter (1) ein elektrisches Verbindungselement (48) aufweist.

12. Stromschienenelement (40) nach einem der Ansprüche 6 bis 11, mit:
- einem Winkelelement (34), das an einer Innenfläche der Montagewand (35) angebracht ist und ein Fenster (37) aufweist,
- einem mechanischen Verbindungselement (26), das ein Rastelement (33) umfasst, das in das Fenster (37) eingreift.

13. Stromschienenelement (40) nach dem vorherigen Anspruch, bei dem das mechanische Verbindungselement (26) Ausbuchtungen (39) an gegenüberliegenden Seitenteilen (27) aufweisen, die mit den Seitenwänden (47) des Tragschienenelements (15) in direktem Kontakt stehen.

14. Stromschienenelement (40) nach einem der Ansprüche 12 bis 13, bei dem das mechanische Verbindungselement (26) Vorführungen (30) aufweist, die an einer Stirnseite des Stromschienenelements (40) herausragen.

## Claims

1. Line holder (1) for a busbar system, comprising:
- a plurality of first recesses (2) arranged parallel to one another,
- a plurality of second recesses (3) arranged parallel to one another, wherein
- the first recesses (2) and the second recesses (3) are provided for receiving electrical lines (19),
- the first recesses (2) lie in a first main extension plane and the second recesses (3) lie in a second main extension plane, and
- the first main extension plane and the second main extension plane are arranged spaced apart from one another in a vertical direction (v) which is perpendicular to the main extension planes,
wherein the line holder has two opposite end faces, wherein a first plug-in face (10) is arranged on one end face and a second plug-in face (11) is arranged on the other end face,
**characterized in that**
slots (23) are provided on an upper side of the second plug-in face (11), which slots run along the recesses (2, 3) and permit a sliding connection to the first plug-in face (10) of a further line holder (1).

2. Line holder (1) according to the preceding claim,
in which the first recesses (2) and the second recesses (3) are arranged alternately in a horizontal direction.

3. Line holder (1) according to one of the preceding claims, which has a snap-in hook (13) at an end region of an upper side (4) and a receptacle (12) for the snap-in hook (13) at an opposite end region of the upper side (4).

4. Line holder (1) according to one of the preceding claims, in which walls of the recesses (2,3) have apertures (17), wherein lugs (18) are formed on the inner sides of the wall in the region of an aperture (17), which lugs (18) are provided for fastening the electrical lines (19).

5. Line holder (1) according to one of the preceding claims, having an adjustment element (20) which is arranged on a side face (6, 7) of the line holder (1) and projects beyond an underside (5) of the line holder (1).

6. Busbar element (40) having:
- a support rail element (15) which has two opposite side walls (47) and a mounting wall (35), and
- at least one line holder (1) according to one of the preceding claims, wherein
- the main extension planes of the line holder (1) are arranged along the mounting wall (35) of the support rail element (15), and
- openings of the recesses (2, 3) point in the vertical direction (v).

7. Busbar element (40) according to the preceding claim, having a functional insert (21) which has an electrical tapping element (49), wherein the electrical tapping element (49) is arranged parallel to the vertical direction (v) and engages in the openings.

8. Busbar element (40) according to one of claims 6 to 7, which has a grounding spring (41) between the mounting wall (35) and the line holder (1), wherein the grounding spring (41) grounds the support rail element (15).

9. Busbar element (40) according to one of claims 6 to 8,
in which the grounding spring (41) has a first contacting region (42) with a sharp-edged contour which penetrate an electrically insulating coating of the support rail element (15), such that the grounding spring (41) is electrically conductively connected to the support rail element (15).

10. Busbar element (40) according to the preceding claim, in which the grounding spring (41) has an eye as a third contacting region (45) which at least partially surrounds an electrical line (19) and is electrically conductively connected to the electrical line (19).

11. Busbar element (40) according to one of claims 6 to 10, in which a line holder (1) has an electrical connecting element (48).

12. Busbar element (40) according to one of claims 6 to 11, having:
- an angle element (34) which is attached to an inner surface of the mounting wall (35) and has a window (37),
- a mechanical connecting element (26) which comprises a latching element (33) which engages in the window (37).

13. Busbar element (40) according to the preceding claim, in which the mechanical connecting element (26) has bulges (39) on opposite side parts (27) which are in direct contact with the side walls (47) of the support rail element (15).

14. Busbar element (40) according to one of claims 12 to 13, in which the mechanical connecting element (26) has projections (30) which project on an end face of the busbar element (40).

## Revendications

1. Support de ligne (1) pour un système de barre conductrice avec :
- une pluralité de premiers évidements (2) disposés parallèlement entre eux,
- une pluralité de deuxièmes évidements (3) disposés parallèlement entre eux, dans lequel
- les premiers évidements (2) et les deuxièmes évidements (3) sont prévus pour le logement de lignes électriques (19),
- les premiers évidements (2) se trouvent dans un premier plan d'extension principal et les deuxièmes évidements (3) se trouvent dans un deuxième plan d'extension principal et
- le premier plan d'extension principal et le deuxième plan d'extension principal sont disposés de manière distante entre eux dans une direction verticale (v) qui est perpendiculaire aux plans d'extension principaux,
dans lequel le support de ligne comprend deux faces frontales opposées, dans lequel, sur une face frontale, se trouve une première face d'enfichage (10) et sur l'autre face frontale se trouve une deuxième face d'enfichage (11),
**caractérisé en ce que**
des fentes (23) sont prévues sur un côté supérieur de la deuxième face d'enfichage (11), qui s'étendent le long des évidements (2, 3) et qui permette une liaison glissante avec la première face d'enfichage (10) d'un autre support de ligne (1).

2. Support de ligne (1) selon la revendication précédente,
dans lequel les premiers évidements (2) et les deuxièmes évidements (3) sont disposés de manière alternée dans une direction horizontale.

3. Support de ligne (1) selon l'une des revendications précédentes, qui comprend, sur une partie d'extrémité d'un côté supérieur (4), un crochet d'encliquetage (13), et, sur une partie d'extrémité opposée du côté supérieur (4), un logement (12) pour le crochet d'encliquetage (13).

4. Support de ligne (1) selon l'une des revendications précédentes, dans lequel les parois des évidements (2, 3) présentent des percées (17), dans lequel, au niveau d'une percée (17), sont formés des embouts (18) sur les faces internes de la paroi, qui sont prévus pour la fixation des lignes électriques (19).

5. Support de ligne (1) selon l'une des revendications précédentes, avec un élément d'ajustement (20), qui est disposé sur une surface latérale (6, 7) du support de ligne (1) et qui dépasse d'un côté inférieur (5) du support de ligne (1).

6. Élément de barre conductrice (40) avec :
- un élément de barre de support (15) qui comprend deux parois latérales opposées (47) et une paroi de montage (35) et
- au moins un support de ligne (1) selon l'une des revendications mentionnées ci-dessus, dans lequel
- les plans d'extension principaux du support de ligne (1) sont disposés le long de la paroi de montage (35) de l'élément de barre de support (15) et
- les ouvertures des évidements (2, 3) sont orientées dans la direction verticale (v).

7. Élément de barre conductrice (40) selon la revendication précédente, avec un insert fonctionnel (21) qui comprend un élément de prise électrique (49), dans lequel l'élément de prise électrique (49) est disposé parallèlement à la direction verticale (v) et s'emboîte dans les ouvertures.

8. Élément de barre conductrice (40) selon l'une des revendications 6 à 7, qui comprend un ressort de mise à la terre (41) entre la paroi de montage (35) et le support de ligne (1), dans lequel le ressort de mise à la terre (41) relie l'élément de barre de support (15) à la terre.

9. Élément de barre conductrice (40) selon l'une des revendications 6 à 8,
dans lequel le ressort de mise à la terre (41) comprend une première partie de contact (42) avec un contour à angles vifs, qui pénètre à travers un revêtement isolant électriquement de l'élément de barre de support (15), de sorte que le ressort de mise à la terre (41) est relié de manière électro-conductrice avec l'élément de barre de support (15).

10. Élément de barre conductrice (40) selon la revendication précédente, dans lequel le ressort de mise à la terre (41) comprend un oeillet en tant que troisième partie de contact (45), qui entoure une ligne électrique (19) au moins partiellement et qui le relie de manière électro-conductrice avec la ligne électrique (19).

11. Élément de barre conductrice (40) selon l'une des revendications 6 à 10, dans lequel un support de ligne (1) comprend un élément de liaison électrique (48).

12. Élément de barre conductrice (40) selon l'une des revendications 6 à 11, avec :
- un élément angulaire (34) qui est monté sur une surface interne de la paroi de montage (35) et qui comprend une fenêtre (37),
- un élément de liaison mécanique (26), qui comprend un élément d'encliquetage (33) qui s'emboîte dans la fenêtre (37).

13. Élément de barre conductrice (40) selon la revendication précédente, dans lequel l'élément de liaison mécanique (26) présente des protubérances (39) qui dépassent au niveau de parties latérales (27) qui sont en contact direct avec les parois latérales (47) de l'élément de barre de support (15).

14. Élément de barre conductrice (40) selon l'une des revendications 12 à 13, dans lequel l'élément de liaison mécanique (26) présente des saillies (30) qui dépassent au niveau d'une face frontale de l'élément de barre conductrice (40).
